# EUROPÄISCHE PATENTSCHRIFT

(11) **EP 3 933 279 B1**
(45) Veröffentlichungstag und Bekanntmachung des Hinweises auf die Patenterteilung: **01.11.2023**
(21) Anmeldenummer: 21188129.7
(22) Anmeldetag: 07.04.2020
(51) Int. Cl.: F24C 15/16, A47J 27/04, A47L 15/50

(54) **HAUSHALTSGERÄT ODER GEWERBEGERÄT**
HOUSEHOLD APPLIANCE OR COMMERCIAL APPLIANCE
APPAREIL ÉLECTROMÉNAGER OU APPAREIL INDUSTRIEL

(30) Priorität: 24.04.2019 DE 102019110605; 12.06.2019 DE 102019115976; 14.06.2019 DE 102019116189
(43) Veröffentlichungstag der Anmeldung: 05.01.2022
(62) Teilanmeldung aus: 20168383.6
(73) Patentinhaber: Miele & Cie. KG, 33332 Gütersloh (DE)
(72) Erfinder: Peter, Sarah, 46286 Dorsten (DE)

(56) Entgegenhaltungen:
- EP-A1- 2 977 685
- EP-B1- 3 804 565
- WO-A1-02/33325
- WO-A1-2014/056764
- WO-A1-2017/174794
- DE-A1- 19 951 267
- DE-A1-102008 035 078
- DE-B3-102019 124 058
- FR-A1- 2 608 905
- US-A1- 2014 285 078
- US-A1- 2018 313 545

## Beschreibung

Die Erfindung betrifft ein Haushaltsgerät oder Gewerbegerät zum Reinigen, Lagern oder Garen von Gegenständen, umfassend ein von Wandungen gebildetes Gehäuse, mittels dessen ein Innenraum räumlich eingefasst ist, sowie mindestens eine aus dem Innenraum entnehmbare Trageinrichtung, wobei die Trageinrichtung mindestens ein Schienensystem mit mindestens zwei miteinander verbundenen, relativ zueinander beweglichen Schienen sowie mindestens ein Tragelement umfasst, wobei das Schienensystem bei Vorliegen der Trageinrichtung in einem Einbauzustand derart in Kraft übertragender Weise an dem Gehäuse gelagert ist, dass das Tragelement mittels Ausziehens des Schienensystems relativ zu dem Gehäuse bewegbar ist, wobei eine an der Trageinrichtung angeordnete Verriegelungseinheit, die mindestens ein Verriegelungselement umfasst, zwischen einem Blockierzustand und einem Freizustand überführbar ist, wobei die Verriegelungseinheit bei Vorliegen der Trageinrichtung in deren Ausbauzustand, in dem die Trageinrichtung körperlich von dem Gehäuse getrennt ist, in ihrem Blockierzustand vorliegt, bei dessen Vorliegen das Verriegelungselement unter Bildung eines Formschlusses das Ausziehen des Schienensystems blockiert, und wobei die Verriegelungseinheit bei Vorliegen der Trageinrichtung in deren Einbauzustand in ihrem Freizustand vorliegt, bei dessen Vorliegen das Verriegelungselement das Ausziehen des Schienensystems freigibt.

Das Haushaltsgerät bzw. das Gewerbegerät im Sinne der vorliegenden Anmeldung ist dazu geeignet, mindestens einen Gegenstand zu reinigen, zu lagern oder zu garen. Ein entsprechendes Haushaltsgerät kann insbesondere von einer Spülmaschine, einem Kühlschrank, einem Backofen oder einem Dampfgarer gebildet sein. Das Haushaltsgerät kann insbesondere in Form eines Haushaltseinbaugeräts ausgeführt sein. Das Gewerbegerät kann insbesondere von einem professionellen Kühlschrank, einer professionellen Spülmaschine, einem professionellen Backofen oder einem professionellen Konvektomat gebildet sein, die beispielsweise für den Einsatz in Großküchen oder der Gastronomie vorgesehen sind.

Das Haushaltsgerät bzw. das Gewerbegerät umfasst ein von Wandungen gebildetes Gehäuse, mittels dessen ein Innenraum räumlich eingefasst ist. Am Beispiel eines Backofens ist der Innenraum von einem Garraum gebildet. Das Gehäuse kann ein tragendes Gehäuse sein, aber auch durch die Wandungen gebildet werden, die den Innenraum einfassen. Ferner umfasst das jeweilige Gerät eine aus dem Gehäuse entnehmbareTrageinrichtung. Letztere umfasst ihrerseits mindestens ein Schienensystem sowie mindestens ein Tragelement. Das Schienensystem weist mindestens zwei miteinander verbundene, relativ zueinander bewegliche Schienen auf. Insbesondere kann es von einem Teleskopauszug gebildet sein. Das Tragelement wirkt mit einer der Schienen des Schienensystems zusammen. Es dient dazu, mindestens einen Gegenstand aufzunehmen. Beispielsweise kann das Tragelement bei einem als Kühlschrank ausgebildeten Gerät von einem Einlegeboden, bei einem beispielsweise als Backofen ausgebildeten Gerät von einem Rost oder Backblech und bei einem Geschirrspüler von einem Spülkorb gebildet sein. Die Trageinrichtung ist auf diese Weise dazu hergerichtet, das Tragelement aus dem Innenraum heraus und damit relativ zu dem Gehäuse zu bewegen, ohne die Trageinrichtung als solche aus dem Gehäuse entnehmen zu müssen. Somit ist das Schienensystem bei Vorliegen der Trageinrichtung in einem Einbauzustand in Kraft übertragender Weise an dem Gehäuse gelagert. Hierbei ist es vor allem bei größeren Geräten, deren Innenraum eine lichte Breite zwischen den sich einander gegenüberliegenden Wandungen von beispielsweise 90 cm aufweisen, üblich, das jeweilige Tragelement fest mit dem ihm zugeordneten Schienensystem, vorzugsweise an der Schiene, die am weitesten aus dem Innenraum herausziehbar ist, verbunden ist und folglich bei einer Entnahme des Tragelements die Trageinrichtung als Ganzes aus dem Gerät entnommen wird. Die Entnehmbarkeit einer jeweiligen Trageinrichtung, das heißt deren Überführung von ihrem Einbauzustand in einen Ausbauzustand, dient insbesondere dazu, die Trageinrichtung als Ganzes außerhalb des jeweiligen Geräts reinigen zu können. Hierbei hat es sich als problematisch herausgestellt, dass die Schienen des Schienensystems auch dann eine Relativbewegung zueinander ausführen können, wenn die Trageinrichtung in ihrem Ausbauzustand vorliegt, in dem sie körperlich von dem Gehäuse getrennt ist. Dies kann in der Praxis zu einer ungewollten Bewegung des Schienensystems führen. Dabei kann beispielsweise bei einem als Backofen ausgebildeten Haushaltsgerät eine Gefahr vorliegen, sofern die Trageinrichtung im unmittelbaren Anschluss an einen Garvorgang entnommen wird und eine erhöhte Temperatur aufweist.

Aus dem Stand der Technik (DE 199 51 267 A1 A1 oder WO 02/033 325 A1) bekannte Geräte besitzen deshalb eine Verriegelungseinheit, die an der Trageinrichtung angeordnet ist und mindestens ein Verriegelungselement umfasst. Die Verriegelungseinheit ist zwischen einem Blockierzustand und einem Freizustand überführbar, wobei der Blockierzustand der Verriegelungseinheit mit dem Ausbauzustand der Trageinrichtung korrespondiert. In diesem Blockierzustand der Verriegelungseinheit ist das Ausziehen des Schienensystems, das heißt die Relativbewegung der mindestens zwei Schienen des Schienensystems zueinander, blockiert, im bekannten Stand der Technik unter Bildung eines Formschlusses des Verriegelungselements mit einem Formschlusspartner. Mit anderen Worten ist es bei Vorliegen der Verriegelungseinheit in ihrem Blockierzustand nicht möglich, die Schienen des Schienensystems relativ zueinander zu bewegen. Die Verriegelungseinheit ist ferner derart ausgebildet, dass sie bei Vorliegen der Trageinrichtung in deren Einbauzustand in einem Freizustand vorliegt. In diesem Freizustand entfaltet die Verriegelungseinheit keine Blockierwirkung für die Trageinrichtung. Das heißt, dass bei Vorliegen der Verriegelungseinheit in ihrem Freizustand das Ausziehen des Schienensystems freigegeben ist. Ebendies soll bei Vorliegen der Trageinrichtung in ihrem Einbauzustand möglich sein, damit der Ausziehmechanismus des Schienensystems wie gewünscht eingesetzt werden kann. Dadurch unterbindet die Verriegelungseinheit bei Vorliegen der Trageinrichtung in ihrem Ausbauzustand das unbeabsichtigte Ausziehen des Schienensystems. Die bekannten Geräte sind so gestaltet, dass das Verriegelungselement im Zuge der Überführung der Trageinrichtung von ihrem Einbauzustand in ihrem Ausbauzustand automatisch von seiner Freistellung in seine Blockierstellung überführbar ist, zumindest dann wenn beim Ausbauen der Trageinrichtung das Schienensystem bereits vollständig eingefahren war. Hierzu ist das Verriegelungselement derart ausgebildet, dass eine Wirkungslinie der infolge Eigengewichts des Verriegelungselements auf selbiges wirkenden Gewichtskraft unter einem Hebelarm bezogen auf die Drehachse des Verriegelungselements verläuft, sodass das Verriegelungselement allein aufgrund der auf es einwirkenden Gewichtskraft ausgehend von seiner Freistellung in Richtung einer Blockierstellung überführbar ist. Für diese Überführung bedarf es folglich lediglich einer freien Drehbarkeit des Verriegelungselements relativ zu der Trageinrichtung, sodass diese selbsttätig in ihre Blockierstellung dreht. Bei dieser Ausgestaltung ist mithin sichergestellt, dass die Trageinrichtung im Zuge ihres Ausbaus aus dem jeweiligen Haushaltsgerät oder Gewerbegerät "automatisch" gesichert wird, indem das Verriegelungselement in seine Blockierstellung überführt und mithin die Verriegelungseinheit in ihren Blockierzustand versetzt werden. Die Schienen des Schienensystems sind daraufhin derart blockiert, dass sie nicht in unbeabsichtigter Weise relativ zueinander bewegt werden können. Einer gesonderten Handlung eines Nutzers des Haushaltsgeräts oder Gewerbegeräts für diese Sicherung des Schienensystems bedarf es folglich nicht. Die automatische Überführung des Verriegelungselements von seiner Freistellung in seine Blockierstellung erfolgt infolge eines Wegfallens eines Anschlags des Verriegelungselements, das sich im Zuge des Ausbaus der Trageinrichtung aus dem jeweiligen Gerät ergibt. Das bekannte Verriegelungselement ist drehbar ausgebildet, wobei es unter Ausbildung einer Drehachse an der Trageinrichtung gelagert ist. Auf diese Weise kann das Verriegelungselement zwischen einer Blockierstellung und einer Freistellung überführt werden, wobei die Blockierstellung des Verriegelungselements mit dem Blockierzustand der Verriegelungseinheit und umgekehrt die Freistellung des Verriegelungselements dem Freizustand der Verriegelungseinheit korrespondieren. Mit anderen Worten greift das Verriegelungselement bei Vorliegen in dessen Blockierstellung formschlüssig mit einem jeweiligen Formschlusspartner ein und verhindert auf diese Weise die Relativbewegung der Schienen des Schienensystems zueinander.

Bei den bekannten Geräten liegen die Verriegelungselemente nur in einer Blockierstellung vor, wenn die in ihrem Ausbauzustand befindliche Trageinrichtung in einer Nutzungsausrichtung vorliegt, in der das Tragelement zur Aufnahme eines Gegenstands vorgesehen ist. Insbesondere kann das Tragelement bei Vorliegen der Trageinrichtung in ihrer Nutzungsausrichtung horizontal orientiert sein, wie es für ein Backblech, einen Einlegeboden oder einen Rost üblich ist. Da die bekannten Verriegelungseinrichtungen aufgrund der Schwerkraft wirken, verriegeln sie nicht, wenn die Trageinrichtung gegenüber der Nutzungsausrichtung um 180° in eine Umkehrausrichtung gedreht ist, das heißt gewissermaßen "auf dem Kopf steht". Das Drehen der Trageinrichtung in diese Position ist beispielsweise bei ihrer Reinigung durch den Benutzer durchaus nicht unüblich, so dass es bereits bei der Überführung in die Position zu einem ungewollten Lösen der Blockierstellung und dann bei einem darauffolgenden Kippen desr Trageinrichtung zu einem Ausfahren der Schienen kommen kann. Dabei sind Verletzungen des Benutzers oder Zerstörungen von Gegenständen, die sich im Fahrweg der Schienen befinden, möglich.

**Aus der** WO 2017/174794 A1 **ist ein Haushaltgerät bekannt, in dessen Innenraum eine Tragelement (hier der Unterkorb eines Geschirrspülers) mittels eines Schienensystems aus dem Innenraum des Geräts herausgezogen werden kann. Darüber hinaus kann das Tragelement in einer ausgezogenen Endposition mittels eines Hubmechanismus angehoben werden. Eine Verriegelungseinheit sorgt dafür, dass in einem angehobenen Zustand des Tragelements ein Einfahren in den Innenraum durch Blockieren des Schienensystems nicht möglich ist. Eine Entriegelung der Verriegelungseinheit beim Absenken des Tragelements kann durch einen Federmechanismus erfolgen.**

Der vorliegenden Anmeldung liegt mithin die Aufgabe zugrunde, ein Haushaltsgerät oder Gewerbegerät zur Verfügung zu stellen, dessen Betriebssicherheit gegenüber dem Stand der Technik verbessert ist bei denen sichergestellt wird, dass auch in diesem Szenario das unbeabsichtigte Ausziehen des Schienensystems blockiert ist.

Die zugrundeliegende Aufgabe wird erfindungsgemäß durch Haushaltsgeräte oder Gewerbegeräts mit den Merkmalen des unabhängigen Anspruchs 1 gelöst. Vorteilhafte Ausgestaltungen ergeben sich aus den jeweils nachfolgenden abhängigen Ansprüchen.

Die erfindungsgemäßen Vorteile werden bei einem eingangs genannten Gerät dadurch erreicht, dass das Verriegelungselement in dem Freizustand der Verriegelungseinheit gegen die Kraft einer Feder vorgespannt ist. Durch die Feder wird erreicht, dass das Verriegelungselement immer dann, wenn die Verriegelungseinheit sich nicht zwangsweise in ihrem Freizustand befindet, durch die Feder automatisch in eine Position bewegt wird, in der die Verriegelungseinheit sich in ihrem Blockierzustand befindet oder zumindest bringen lässt. Auch diese Ausführungsform des Haushaltsgeräts oder Gewerbegeräts ist so konstruiert, dass das Verriegelungselement im Ausbauzustand der Trageinrichtung unabhängig davon wirkt, in welcher Position die Trageinrichtung gehalten wird, sei es in der Nutzungseinrichtung, oder auch in einer Umkehrausrichtung, inder die Trageinrichtung gegenüber der Nutzungsausrichtung um 180° gedreht ist, das heißt gewissermaßen "auf dem Kopf steht".

Dabei ist es vorteilhaft, wenn das Verriegelungselement in dem in dem Einbauzustand der Trageinrichtung gegen die Kraft der Feder in einen Freizustand der Verriegelungseinheit gedrückt ist. So wird sichergestellt, dass sich das Verriegelungselement in dem Freizustand der Verriegelungseinheit, das heißt in dem Einbauzustand der Trageinrichtung, nicht lösen und die Verriegelungseinheit in einen Blockierzustand bringen kann. Es ist aber auch aus den bereits zuvor beschriebenen Gründen vorteilhaft, wenn das Verriegelungselement in dem Ausbauzustand der Trageinrichtung von der Feder in einen Blockierzustand der Verriegelungseinheit gedrückt wird. Durch automatische Überführung der Verriegelungseinheit in den Frei- bzw. Blockierzustand mittels der Feder ist ein Eingriff des Benutzers nicht erforderlich und eine Ver- bzw. Entriegelung der Schienen kann nicht vergessen werden.

Ein einfacher Aufbau einer erfindungsgemäßen Verriegelungseinheit ergibt sich dadurch, dass das Verriegelungselement einen drehbar gelagerten Haken umfasst. Dabei ist es dann insbesondere vorteilhaft, wenn der Haken an einem ersten Bauteil der Trageinrichtung angeordnet ist und zur Herstellung des Blockierzustands den Rand einer Öffnung in einem zweiten Bauteil der Trageinrichtung umgreift. Der Haken kann an einer ersten Schiene und die Öffnung an einer zweiten Schiene eines Schienensystems angeordnet sein. Dadurch ergibt sich ein kompakter Aufbau, der bei der Handhabung der Trageinrichtung nicht hinderlich ist. Dies wird umsomehr erreicht, wenn die erste Schiene und der Haken zu einer näherliegenden Seitenwandung des Gehäuses gerichtet sind.

Es ist besonders vorteilhaft, wenn der Drehweg des Hakens in mindestens einer Drehrichtung durch einen Anschlag begrenzt wird. Hierdurch kann sichergestellt werden, dass die Feder weder zu stark zusammengedrückt wird noch, dass sie sich soweit entspannt, dass sie aus der Verriegelungseinheit herausfallen kann.

Eine konstruktiv einfache Ausführung der Verriegelungseinheit wird auch noch dadurch erreicht, dass der Betätigungsarm von einem abgewinkelten Teilstück einer Aufnahmestange der Aufnahme bewegt wird und dadurch den Haken in seinen Freizustand dreht.

Die zuvor beschriebene erfindungsgemäße Ausführungsform besitzt den Vorteil, dass die Verriegelungseinheiten bzw. -elemente sich jeweils nur an den Trageinrichtungen befinden, so dass sich konstruktive Änderungen zum Erreichen der erfindungsgemäßen Vorteile auf die Trageinrichtung beschränken können. Somit können sogar bei bereits an den Kunden ausgelieferten Geräten Trageinrichtungen ohne Verriegelungseinrichtung gegen erfindungsgemäße Trageinrichtungen ausgetauscht werden.

Ein Ausführungsbeispiel der Erfindung ist in den Zeichnungen rein schematisch dargestellt und wird nachfolgend näher beschrieben. Es zeigt:
- Figur 1: eine Frontansicht eines Haushaltsgeräts gemäß dem Stand der Technik,
- Figur 2: eine perspektivische Ansicht einer Trageinrichtung in einem Einbauzustand mit ausgezogenem Schienensystem,
- Figur 3: die Trageinrichtung aus Figur 2 mit eingefahrenem Schienensystem in einem Ausbauzustand in einer Nutzungsausrichtung,
- Figur 4: die Trageinrichtung aus Figur 2 mit eingefahrenem Schienensystem in einem Ausbauzustand und in einer gegenüber der Nutzungsausrichtung um 180° gedrehten Umkehrausrichtung,
- Figur 5: ein schematisches Detail eines ersten Ausführungsbeispiels einer mit einer Verriegelungseinheit ausgestatteten Trageinrichtung, die auf einer Auflage aufliegt, wobei die Verriegelungseinheit in ihrem Freizustand vorliegt,
- Figur 6: das Detail gemäß Figur 5, jedoch aus einer anderen Perspektive,
- Figur 7: das Detail gemäß Figur 6, wobei Verriegelungselemente der Verriegelungseinheit jeweils in einer ersten Blockierstellung vorliegen,
- Figur 8: das Detail gemäß Figur 7, wobei die Verriegelungselemente jeweils in einer zweiten Blockierstellung vorliegen,
- Figur 9: eine Seitenansicht eines zweiten Ausführungsbeispiels einer Verriegelungseinheit mit einem Verriegelungselement in einer ersten Festposition,
- Figur 10: wie Figur 9, wobei das Verriegelungselement in einer zweiten Festposition vorliegt,
- Figur 11: die Verriegelungseinheit mit dem Verriegelungselement in Drehposition,
- Figur 12: eine perspektivische Ansicht des zweiten Ausführungsbeispiels einer Trageinrichtung sowie deren Verriegelungseinheit,
- Figur 13: einen vertikalen Schnitt durch das zweite Ausführungsbeispiel einer Trageinrichtung und deren Verriegelungseinheit,
- Figur 14: einen vertikalen Schnitt durch ein drittes Ausführungsbeispiel einer Trageinrichtung und deren Verriegelungselement,
- Figur 15: einen vertikalen Schnitt gemäß Figur 14, wobei die Trageinrichtung in einem Einbauzustand vorliegt,
- Figur 16: ein viertes Ausführungsbeispiel einer Trageinrichtung in einer Aufnahme,
- Figur 17: die Trageinrichtung nach Figur 16 im Ausbauzustand,
- Figur 18: das Schienensystem der Trageinrichtung nach Figur 16 mit einer erfindungsgemäßen Verriegelungseinheit in ihrem Freizustand und
- Figur 19: das Schienensystem der Trageinrichtung nach Figur 16 mit einer erfindungsgemäßen Verriegelungseinheit in ihrem Blockierzustand.

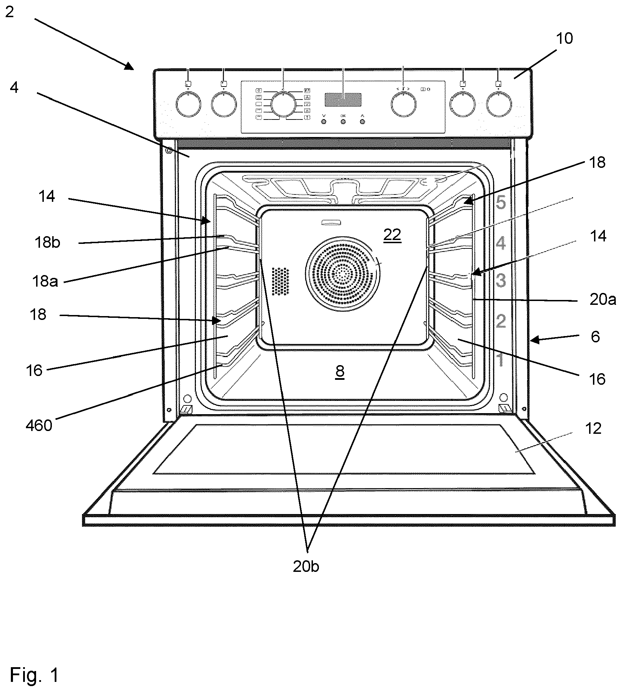

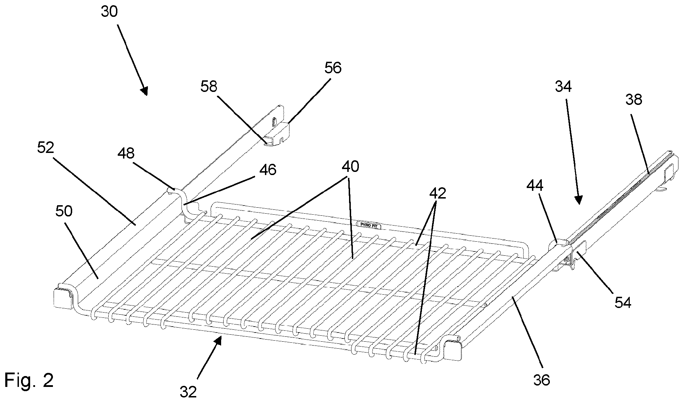

Alle nachfolgend beschriebenen Ausführungsbeispiele betreffen ein Haushaltsgerät 2, welches im vorliegenden Beispiel nach Art eines Backofens zum Garen von Lebensmitteln ausgebildet ist. Ein derartiges Haushaltsgerät 2 ist beispielhaft in Figur 1 dargestellt. Das Haushaltsgerät 2 weist ein von Wandungen 4 gebildetes, quaderförmiges Gehäuse 6 auf, welches einen Innenraum 8 einschließt. Eine Wandung 4 des Gehäuses, welche zugleich eine Frontseite 10 des Haushaltsgeräts 2 ausbildet, ist mit einer Tür 12 versehen. Ferner weist das Haushaltsgerät 2 im Innenraum 8 angeordnete Aufnahmen 14 zur Auflage einer Trageinrichtung 30 (Figuren 2 bis 4) auf. Die Aufnahmen 14 sind an zwei gegenüberliegenden Seitenwandungen 16 des Gehäuses 6 angeordnet und jeweils aus einer Mehrzahl von metallischen Stangen gebildet. Beide Aufnahmen 14 sind mit drei, in einem vertikalen Abstand zueinander angeordneten Stangenpaaren 18, jeweils umfassend zwei, horizontal verlaufende Aufnahmestangen 18a und 18b versehen. Dabei bildet diejenige Aufnahmestange 18a des Stangenpaares 18, welche unterhalb der jeweils anderen Aufnahmestange 18b des Stangenpaares 18 angeordnet ist,zusammen mit einer Aufnahmestange 18a auf der Aufnahme 14 der gegenüberliegenden Seitenwandung 16 eine Auflagefläche für die Trageinrichtung aus, während die obere Aufnahmestangen 18b der Stangenpaare 18 verhindern, dass die Trageinrichtung 30 infolge einer asymmetrischen Beladung kippt. Die einer Seitenwandung 16 zugeordneten Stangenpaare 18 sind an zwei vertikal ausgerichteten Verbindungsstangen 20a und 20b fixiert. Hierbei ist jeweils eine Verbindungsstange 20b an einer der Frontseite 10 abgewandten Rückwand 22 des Haushaltsgeräts 2 angeordnet, während die andere Verbindungsstange 22a in einem der Tür 12 zugewandten Bereich der jeweiligen Seitenwandung 16 angeordnet ist.

Die Trageinrichtung 30, welche für alle Ausführungsbeispiele zunächst einmal anhand der Figuren 2 bis 4 allgemein erläutert wird, umfasst ein Tragelement 32 sowie zwei Schienensysteme 34 . Die Schienensysteme 34 weisen jeweils mindestens zwei relativ zueinander bewegliche Schienen 36, 38 und sind nach Art eines Teleskopauszugs gebildet.

Dabei ist eine erste, untere Schiene 36 beweglich in der zweiten, oberen Schiene 38 gelagert. Es sei noch angemerkt, dass zwischen den unteren Schienen 36 und den oberen Schienen 38 des Schienensystems 34 jeweils eine dritte Schiene angeordnet sein kann, die dann beweglich gegenüber den anderen Schienen 36, 38 gelagert ist. Diese dritten Schienen sind in den Figuren 2 bis 4 nicht erkennbar, allerdings wird durch sie der Auszugsweg der oberen Schienen 38 samt Tragelement 32 vergrößert und es ist möglich, das Tragelement komplett aus dem Innenraum 8 herauszufahren. Das Tragelement 32 ist nach Art eines Rosts ausgebildet. Der Rost besteht aus einer Vielzahl von metallischen Auflagestangen 40, welche eine Auflagefläche für die zu garenden Lebensmittel (nicht dargestellt) bilden. Die Auflagestangen 40 sind an vier, quer zu den Auflagestangen angeordneten Haltestangen 42 fixiert. Das Tragelement 32 ist mittels zwei der Haltestangen 42 an je einer Oberseite der oberen Schienen 38 der Schienensysteme 34 befestigt, beispielsweise durch eine Schweißverbindung. Dabei sind die Enden 44 der beiden Haltestangen 42 etwa S-förmig geformt, sodass ein erster Abschnitt 46 des Endes 44 parallel zu einer Seitenfläche 50 der Schienen 38 und ein zweiter Abschnitt 48 parallel zu der Oberseite 52 der Schienen 38 verläuft.

An einer Unterseite sind die beiden unteren Schienen 36 jeweils mit zwei Auflageelementen 54 und 56 versehen. Die Auflageelemente 54, 56 sind an den Enden der beiden unteren Schienen 36 der Schienensysteme 34 angeordnet. Mittels der Auflageelemente 54, 56 lassen sich die Schienen 36 - und damit die Trageinrichtung 30 - auf der Aufnahme 14 des Haushaltsgeräts 2 halten. Dabei ist die Trageinrichtung 30 mittels der Auflageelemente 54, 56 auf die Aufnahmestangen 18a beider Aufnahmen 14 bzw. deren obere Auflageflächen der besagten Aufnahmestangen 18a aufgelegt. Die im Einbauzustand der Trageinrichtung 30 der Rückwand 22 des Haushaltsgeräts 2 zugewandten hinteren Auflageelement 56 umfassen ferner jeweils einen Sicherungsabschnitt 58, welcher zusätzlich sicherstellt, dass die Trageinrichtung bei der Entnahme des Lebensmittels infolge der durch das Lebensmittel auf den Rost einwirkenden Gewichtskraft bei einer Kippbewegung auf der Aufnahme 14 gehalten wird. Es sei hier noch erwähnt, dass die Aufnahme 14 neben der mit Schienensystemen 34 ausgestatteten Trageinrichtung 30 auch andere, in den Figuren nicht dargestellte Gargutträger wie Bratroste oder Backbleche ohne Schienensysteme 34 aufnehmen kann, die dann einfach mit ihrem Rand zwischen eines der Stangenpaare 18 auf jeder Seite eingeschoben werden können und von der jeweils unteren Aufnahmestange 18a getragen werden.

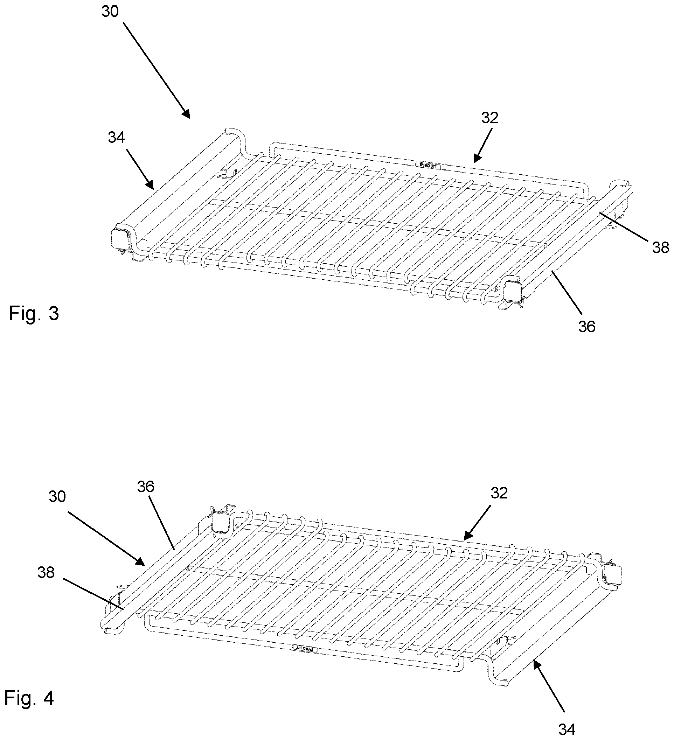

Figur 2 zeigt die Trageinrichtung 30 in einem Zustand, in dem die Schienensysteme 34 sich in einem ausgezogenen Zustand befinden, das heißt, die obere Schiene 38 mit dem Tragelement 32 ist gegenüber der unteren Schiene 36 nach vorn bewegt. Dadurch sind auf dem Tragelement 32 befindliche Lebensmittel (nicht dargestellt) besonders einfach aus dem Innenraum 8 des Haushaltsgeräts 2 zu entnehmen. Aus diesem Grund ist die Trageinrichtung 30 mittelbar in Kraft übertragender Weise an Gehäuse 6, nämlich über die Aufnahmen 14, gelagert. Insbesondere entfällt hierdurch eine Entnahme der gesamten Trageinrichtung 30, sofern lediglich der Garzustand des Lebensmittels geprüft werden soll oder das Lebensmittel im Innenraum 8 des Haushaltsgeräts 2 platziert oder aus diesem herausgenommen werden soll. Figur 3 zeigt entgegen Figur 2 die Trageinrichtung 30 in einem Zustand, in dem die Schienensysteme 34 sich in einem eingeschobenen Zustand befinden. Erfindungsgemäß soll nun sichergestellt werden, dass der in Figur 3 dargestellte Zustand in einem Ausbauzustand der Trageinrichtung 30 immer vorliegt, oder zumindestens dauerhaft hergestellt werden kann, um hierdurch zu vermeiden, dass es zu einer Behinderung des Verwenders durch das Tragelement 32 oder durch die Schienen 36, 38 des Schienensystems 34 kommt, die auftreten könnte, wenn diese infolge einer Veränderung der Ausrichtung der Trageinrichtung 30 im Raum - beispielsweise bei einem Kippen der Trageinrichtung 30 - ungewollt ausfahren würden. In einem Einbauzustand der Trageinrichtung 30 dagegen sollen beide gezeigten Zustände möglich sein. Während Figur 3 die Trageinrichtung 30 - unabhängig davon, ob sie sich in einem Einbau- oder Ausbauzustand befindet - in einer Nutzungsausrichtung zeigt, bei der die oberen Schienen 38 über den unteren Schienen 36 angeordnet sind, ist in der Figur 4 die Trageinrichtung 30 in einem Ausbauzustand gegenüber der Nutzungsausrichtung um 180° gedreht, das heißt, dass sie gewissermaßen "auf dem Kopf steht". Auch in dieser Lage soll es es bei ausgebauter Trageinrichtung nicht möglich sein, dass es zu einer Behinderung des Verwenders durch das Tragelement 32 oder durch die Schienen 36, 38 des Schienensystems 34 kommt, die auftreten könnte, wenn diese infolge einer Veränderung der Ausrichtung der Trageinrichtung 30 im Raum - beispielsweise bei einem Kippen der Trageinrichtung 30 - ungewollt ausgezogen würden. Das erfindungsgemäße Haushaltsgerät 2 besitzt deshalb zwei gleichartige Verriegelungseinheiten, die jeweils einem der Schienensysteme zugeordnet sind.

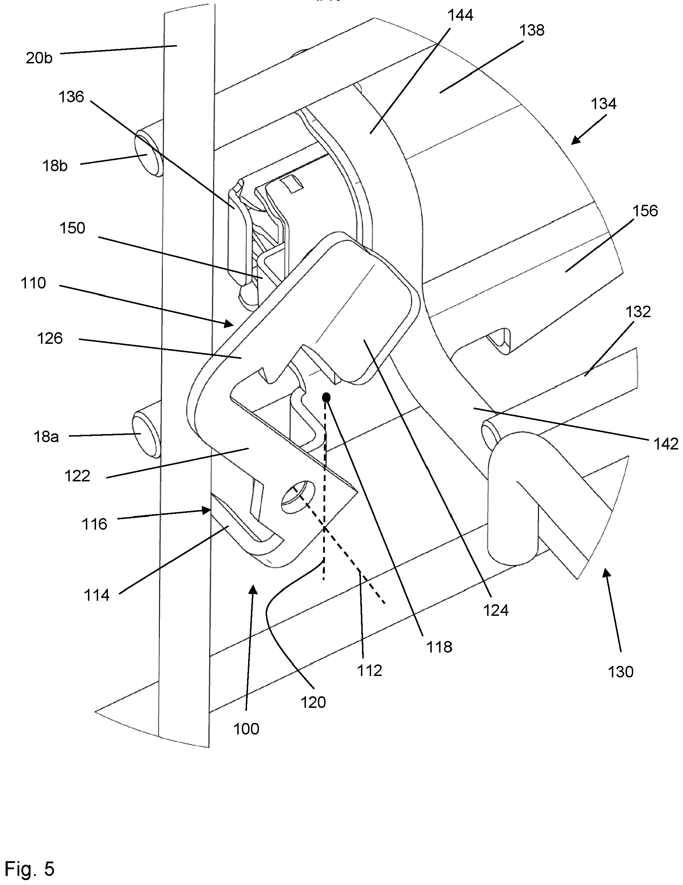

In den Figuren 5 bis 8 und im folgenden Beschreibungsteil ist ein erstes Ausführungsbeispiel einer nicht erfindungsgemäßen Verriegelungseinheit 100 erläutert, dabei wird im Weiteren lediglich auf eine der Verriegelungseinheiten 100 eingegangen. Die Verriegelungseinheit 100 umfasst in dem gezeigten Beispiel zwei Verriegelungselemente110 und 150. Ein erstes Verriegelungselement 110, das um eine Drehachse 112 verdrehbar an der Trageinrichtung 130 gelagert ist, ist mittelbar der unteren Schiene 136 des Schienensystems 134 zugeordnet. Dabei ist das Verriegelungselement 110 unmittelbar an einem Auflageelement 156 der Trageinrichtung 130 angeordnet, wobei die Trageinrichtung 130 mittels des Auflageelements 156 auf eine Aufnahmestange 18a der Aufnahme 14 bzw. eine deren obere Auflagefläche aufgelegt ist. Die untere Schiene 136 des Schienensystems 134 ist unmittelbar mit dem Auflageelement 156 gekoppelt. Das zweite Verriegelungselement 150 ist um eine Drehachse 152 verdrehbar an der Trageinrichtung 130 angeordnet, wobei das Verriegelungselement 150 unmittelbar der oberen Schiene 138 des Schienensystems 134 zugeordnet ist, mit der das Tragelement 132 mittels der Enden 144 seiner Haltestangen 142 verbunden ist.

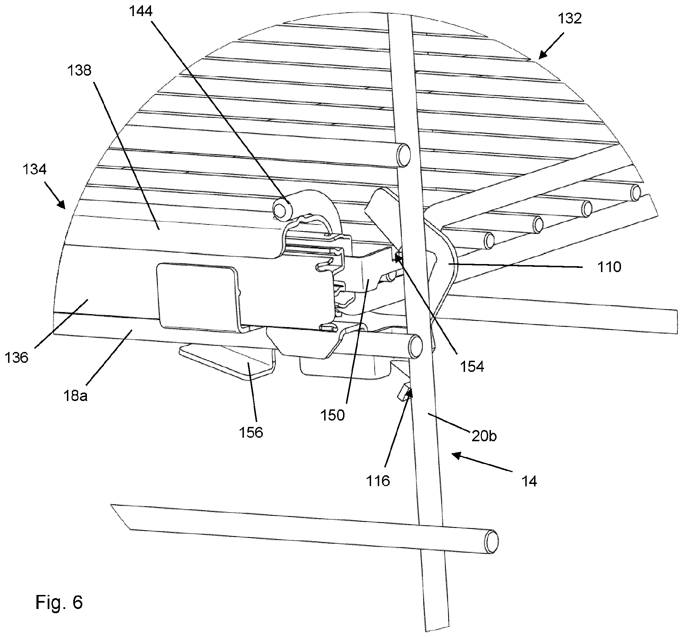

Die Verriegelungseinheit 100 ist zwischen einem Blockierzustand und einem Freizustand überführbar. Der Blockierzustand der Verriegelungseinheit 100 korrespondiert mit Blockierstellungen der Verriegelungselemente 110, 150, während der Freizustand der Verriegelungseinheit 100 mit Freistellungen der Verriegelungselemente 110, 150 korrespondiert. Der Freizustand der Verriegelungseinheit 100 ist besonders gut anhand der Figuren 5 und 6 erkennbar. Er liegt vor, wenn die Verriegelungselemente 110, 150 losgelöst voneinander vorliegen, sodass sie eine Bewegung der beiden Schienen 136 und 138 des Schienensystems 134 relativ zueinander nicht behindern. In besonders vorteilhafter Weise ist das erste Verriegelungselement 110 in dem gezeigten Beispiel mit einer Querstrebe 114 versehen, mittels der das Verriegelungselement 110 an einer Anschlagstelle 116 an einer Vertikalstrebe 20b der Aufnahme 14 anschlagen kann. Hierbei steht das Verriegelungselement 110 über das Tragelement 132 vor. Dies hat zur Folge, dass die Trageinrichtung 130 vollständig in ihren Einbauzustand überführt werden kann, indem sie in das Haushaltsgerät 2 eingesetzt wird. Hierbei kommt es nicht zu einer Kollision des Tragelements 132 mit der Aufnahme 14. Gleichwohl kommt es zu der gewünschten Kollision des Verriegelungselements 110 mit der Aufnahme 14, sodass letzteres selbsttätig, das heißt ohne manuelles Zutun des Nutzers des Haushaltsgeräts 2, in seine Freistellung verschwenkt und einen Formschluss mit dem zweiten Verriegelungselement 150 auflöst. Auf diese Weise ist es infolge des Einsetzens der Trageinrichtung 130 in das Haushaltsgerät 2 gewährleistet, dass die Verriegelungseinheit 100 automatisch in ihren Freizustand überführt wird, woraufhin das Schienensystem 134 freigegeben und folglich die beiden Schienen 136, 138 relativ zueinander bewegbar sind.

In umgekehrter Weise wird die Verriegelungseinheit 100 im Zuge der Überführung der Trageinrichtung 130 von ihrem Einbauzustand in einen Ausbauzustand, in dem die Trageinrichtung 130 aus dem Haushaltsgerät ausgebaut ist und mithin körperlich getrennt von letzterem vorliegt, automatisch in ihren Blockierzustand überführt. Bei der Überführung wird davon ausgegangen, dass die oberen Schienen 138 mit dem Tragelement 132 vollständig auf die unteren Schienen 136 aufgeschoben sind. Die automatische Überführung in den Blockierzustand liegt darin begründet, dass sich ein Schwerpunkt 118 des Verriegelungselements 110 bei Vorliegen des Verriegelungselements 110 in dessen Freistellung außermittig bezogen auf die Drehachse 112 des Verriegelungselements 110 befindet. Mithin verläuft eine Wirkungslinie 120 einer auf das Verriegelungselement 110 infolge Eigengewicht wirkenden Gewichtskraft unter einem Hebelarm 122 bezogen auf die Drehachse 112. Die Gewichtskraft bewirkt mithin ein Rückstellmoment auf das Verriegelungselement 110, infolgedessen das Verriegelungselement 110 ausgehend von seiner Freistellung selbsttätig in eine Blockierstellung verschwenkt, sobald das Verriegelungselement 110 frei verdrehbar ist. Letzteres ist in dem Moment der Fall, in dem die Trageinrichtung 130 derart von der Aufnahme 14 des Haushaltsgeräts 2 gelöst wird, dass der Anschlag des Verriegelungselements 110 an der Vertikalstrebe 20b der Aufnahme 14 wegfällt. Damit der Schwerpunkt 118 gewissermaßen auf der "richtige Seite" der Drehachse 112 angeordnet ist, verfügt das Verriegelungselement 110 in dem gezeigten Beispiel über ein Kopfgewicht 124, das an einem Hakenabschnitt 126 des Verriegelungselements 110 angeordnet ist.

Die Überführung des Verriegelungselements 110 in dessen Blockierstellung bedeutet, dass das Verriegelungselement 110, das hier in Form eines Hakens ausgebildet ist, mit dem Hakenabschnitt 126 formschlüssig mit dem zweiten Verriegelungselement 150 eingreift, wobei der Hakenabschnitt 126 in eine Ausnehmung 154 des zweiten Verriegelungselements 150 einfährt. Eine Stellung des zweiten Verriegelungselement 150 ändert sich dabei zunächst nicht. Der Formschluss der beiden Verriegelungselemente 110, 150 korrespondiert mit dem Blockierzustand der Verriegelungseinheit 100, bei dessen Vorliegen die beiden Schienen 136, 138 des Schienensystems 134 nicht relativ zueinander bewegt werden können. Folglich ist es unterbunden, dass das Schienensystem 6 in unbeabsichtigter Weise auszieht. Die Sicherung des Schienensystems 134 gegen dieses Ausziehen erfolgt dabei automatisch, das heißt ohne manuelles Zutun des Nutzers des Haushaltsgeräts 2. Hierdurch wird eine besonders hohe Sicherheit gegen eine Fehlbedienung erreicht.

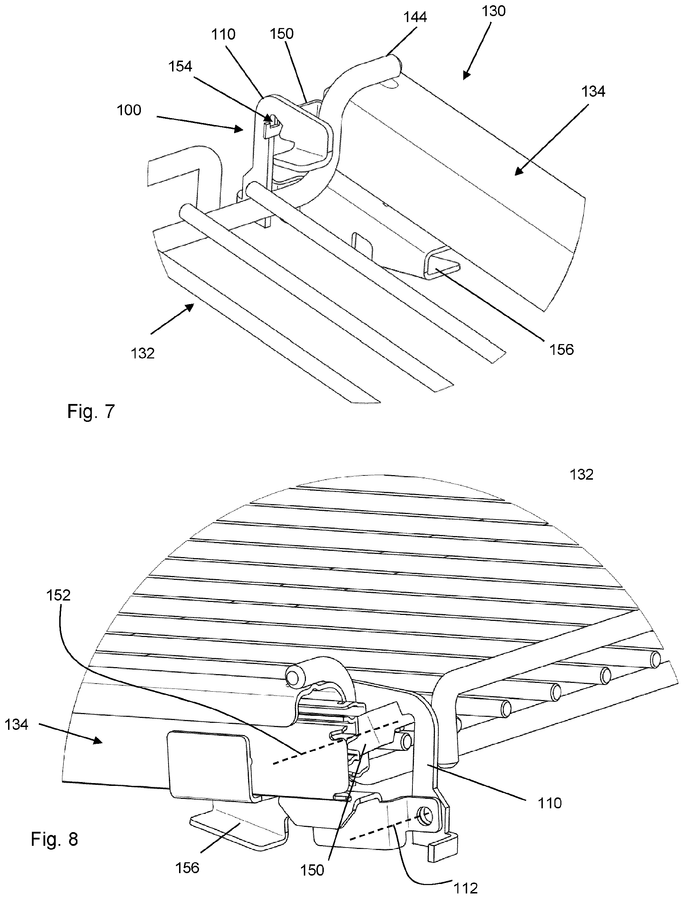

Der Blockierzustand der Verriegelungseinheit 100 ist besonders gut anhand der Figuren 7 und 8 erkennbar. Hierbei ist erwähnenswert, dass der Blockierzustand der Verriegelungseinheit 100 bei Vorliegen der Verriegelungselemente 110, 150 in verschiedenen Blockierstellungen vorliegen kann. Ein erstes Szenario ist vorstehend bereits beschrieben. Hierbei wird die Trageinrichtung 130 ausgehend von ihrem Einbauzustand aus dem Haushaltsgerät 2 entfernt, wobei die Trageinrichtung 130 entlang unteren Aufnahmestange 18a der Aufnahme 14 aus dem Innenraum 8 herausgezogen wird. Hierbei verliert des Verriegelungselement 110 seinen Anschlag an der hinteren Vertikalstrebe 20b und wird infolge seines Eigengewichts automatisch in seine Blockierstellung verdreht und mit dem zweiten Verriegelungselement 150 in Eingriff gebracht. Die beiden Verriegelungselemente 110, 150 befinden sich daraufhin jeweils in einer ersten Blockierstellung. Dies ist in Figur 7 dargestellt. Die Trageinrichtung 130 befindet sich dabei in einer Nutzungsausrichtung. Bei Vorliegen in dieser Nutzungsausrichtung ist das Tragelement 132 zumindest im Wesentlichen horizontal im Raum orientiert, sodass ein Gegenstand auf einer Ablageebene des Tragelement 132 lagerbar ist, und zwar in der in Figur 3 gezeigten Position. In dem gezeigten Beispiel ist mithin das als Rost ausgebildete Tragelement 132 dazu geeignet, ein jeweiliges Gargut aufzunehmen. Das Tragelement 132 mithin dazu vorgesehen, einen Gegenstand aufzunehmen.

Bei Vorliegen der Trageinrichtung 130 in ihrem Ausbauzustand, in dem sie körperlich von dem Gehäuse 6 des Haushaltsgerät 2 getrennt ist, ist es gleichwohl möglich, die Trageinrichtung 130 in andere Ausrichtung zu überführen, beispielsweise in eine Umkehrausrichtung, wie sie in Figur 4 dargestellt ist. Dies kann insbesondere zu Reinigungzwecken vorgesehen sein. In dieser Umkehrausrichtung ist die Trageinrichtung 130 gegenüber der Nutzungsausrichtung um 180° verdreht, sodass sie gewissermaßen verkehrt herum ausgerichtet ist bzw. "auf dem Kopf steht". Dabei ist das Schienensystem 134 auch bei dieser Ausrichtung der Trageinrichtung 130 gegen das unbeabsichtigte Ausziehen gesichert und bleibt es, wenn die Trageinrichtung 130 anschließend in eine andere Ausrichtung gekippt wird. Zu diesem Zweck ist das zweite Verriegelungselement 150 bei dem gezeigten Ausführungsbeispiel um die Drehachse 152 relativ zu der Trageinrichtung 130 verdrehbar. Dies bietet den Vorteil, dass das zweite Verriegelungselement 150 sich infolge der sich ändernden Ausrichtung der auf es einwirkenden Gewichtskraft bewegen kann, wodurch der Formschluss mit dem ersten Verriegelungselement 110 auch dann beibehalten wird, wenn es sich schwerkraftbedingt dreht. Dies ergibt sich besonders gut anhand von Figur 8, die das zweite Verriegelungselement 150 in einer zeichnerisch "nach oben" geschwenkten Blockierstellung zeigen. Tatsächlich ist das Verriegelungselement 150 in der Umkehrausrichtung der Trageinrichtung 130 immer "nach unten" geschwenkt, das heißt jeweils einer Wirkungsrichtung der Schwerkraft folgend. Die Darstellung in Figur 8 zeigt die Trageinrichtung 130 gewissermaßen falsch herum. Die Drehbarkeit des zweiten Verriegelungselement 150 führt dazu, dass letzteres mit seiner Ausnehmung 154 den Formschluss mit dem ersten Verriegelungselement 110 beibehält, sodass im Ergebnis das Schienensystem 134 unabhängig von der Ausrichtung der Trageinrichtung 130 im Raum gegen unbeabsichtigtes Ausziehen blockiert ist. Die Verriegelungseinheit 100 befindet sich mithin wunschgemäß unabhängig von der Ausrichtung der Trageinrichtung 130 in ihrem Blockierzustand.

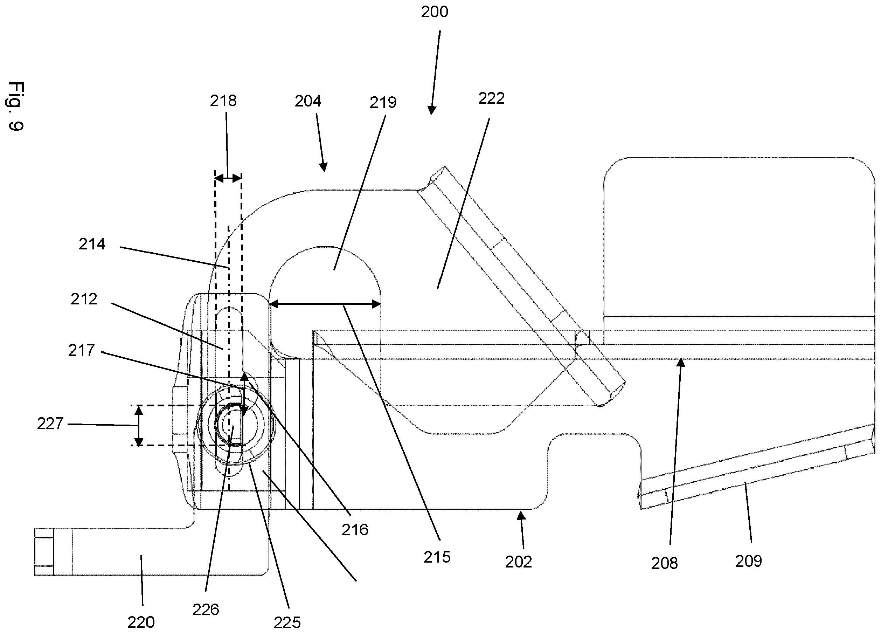

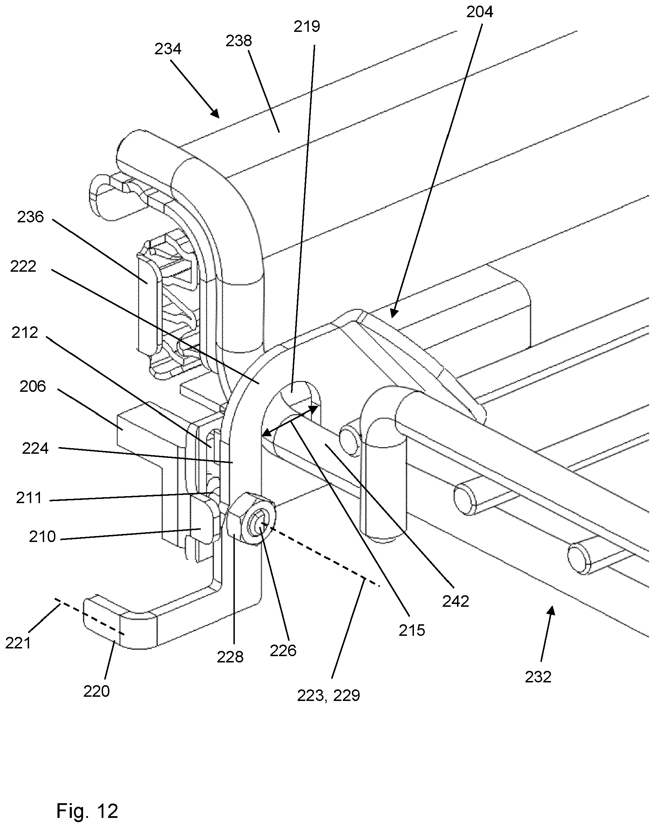

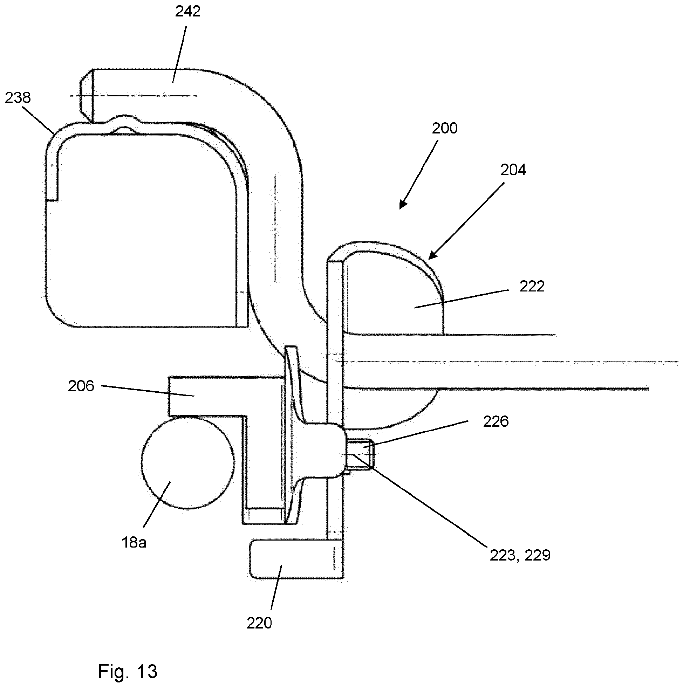

In den Figuren 9 bis 13 ist ein zweites Ausführungsbeispiel einer nicht erfindungsgemäßen Verriegelungseinheit 200 dargestellt und nachfolgend beschrieben. Die Verriegelungseinheit 200 umfasst einen Ablageabschnitt 202, ein Verriegelungselement 204 sowie eine Führungseinrichtung206, welche in den Figuren 12 und 13 gezeigt ist, und ist an einer unteren Schiene 236 der Trageinrichtung 230 angeordnet.

Mittels des Ablageabschnitts 202 ist die Trageinrichtung 230 auf die Aufnahme 14 des Haushaltgeräts 2 auflegbar und somit in ihren Einbauzustand überführbar. Hierfür weist der Ablageabschnitt 202 eine Ablagefläche 208 auf, welche in dem Einbauzustand der Trageinrichtung 230 mit der Auflagefläche der unteren Aufnahmestange 18a der Aufnahme 14 in Kontakt steht. Ein seitlich an der Verriegelungseinheit 200 angeordnetes Halteelement 209 verhindert dabei ein Kippen der Trageinrichtung 230 infolge einer asymmetrischen Beladung eines Tragelements 232 der Trageinrichtung 230.

Ferner ist die Verriegelungseinheit 200 mit einem Langloch 212 versehen, welches bezogen auf die Ebene, die das Tragelement 232 bildet, senkrecht orientiert ist. Bei Vorliegen der Trageinrichtung 230 in ihrem Einbauzustand ist das Langloch 212 vertikal orientiert. Entlang einer Längsachse 214 weist das Langloch 212 einseitig eine halbkreisförmige Aufweitung 216 auf, welche in einem Mittelbereich des Langlochs 212 angeordnet ist. Die Aufweitung 216 weist somit einen Wirkungsbereich auf, in welchem eine Breite 218 des Langlochs 212 größer ist als außerhalb des Wirkungsbereichs.

Das Verriegelungselement 204 umfasst einen Anschlagabschnitt, einen Hakenabschnitt 222 und einen Verbindungsabschnitt 224. Der Verbindungsabschnitt 224 ist stegartig ausgebildet und in einem mittleren Bereich mit einer kreisförmigen Öffnung 225 versehen. Ein Teilbolzen 226, dessen Querschnitt von einer Halbkreisfläche gebildet ist, ist durch die Öffnung 225 hindurch geführt. Der Durchmesser 227 des Teilbolzens 226 entspricht hierbei in etwa dem Durchmesser 217 der Aufweitung 216 des Langlochs 212. Der Teilbolzen 226 ist wie in Figur 12 gezeigt mittels einer Mutter 228 unbeweglich an dem Verriegelungselement 204 verankert. Der Anschlagabschnitt 220 des Verriegelungselements 204, welcher an einem Ende des Verbindungsabschnitts 224 angeordnet ist, weist eine L-förmige Form auf und ist an seinem freien Ende um 90° gegenüber einer Längsachse 229 des Teilbolzens 226, welche zugleich eine Drehachse 223 ausbildet, umgebogen, sodass eine Längsachse 221 des Anschlagabschnitts 220 parallel zu der Drehachse 223 des Teilbolzens 226 verläuft. Der Hakenabschnitt 222 ist an dem anderen Ende des Verbindungsabschnitts 224 angeordnet und weist eine U-förmige Ausnehmung 219 auf. Ein Öffnungsquerschnitt 215 der Ausnehmung 219 ist größer als der Durchmesser einer Haltestange 242 des Tragelements 232. Ferner weist die Verriegelungseinheit 200 wie in Figur 12 gezeigt eine Führungseinrichtung 206 auf. Die Führungseinrichtung 206 ist L-förmig ausgebildet und weist eine kreisförmige Öffnung (in der Figur nicht erkennbar) auf. Der Teilbolzen 226 ist ausgehend von dem Verriegelungselement 204 durch das Langloch 212 der Verriegelungseinheit 200 und die Öffnung der Führungseinrichtung 206 hindurch geführt, wobei zwischen dem Langloch 212 und dem Verriegelungselement 204 ein zusätzliches Distanzelement 211 in Form eines Rings angeordnet ist. Das dem Verriegelungselement 204 abgewandte Ende des Teilbolzens 226 ist hierbei drehbar in der Öffnung der Führungseinrichtung 206 gelagert. Entlang des Langlochs 212 ist der Teilbolzen 226 verschiebbar gelagert. Dabei ist das Verriegelungselement 204 derart in Kraft übertragender Weise mit der Führungseinrichtung 206 verbunden, dass eine Bewegung der Führungseinrichtung 206 entlang des Langlochs 212 auf das Verriegelungselement 204 übertragen wird.

Das Verriegelungselement 204 ist somit zwischen mehreren Festpositionen und einer Drehposition überführbar. In den Festpositionen, welche in den Figuren 9, 10 und 12 gezeigt sind, ist ein Verdrehen des Verriegelungselements 204 zumindest im Wesentlichen verhindert. Sofern sich der Teilbolzen 226 außerhalb des Wirkungsbereichs der Aufweitung 216 befindet, wird eine freie Verdrehung des Verriegelungselements 204 dadurch verhindert, dass der Teilbolzen 226 lediglich bis zu einem Anschlag desselben an dem Langloch 212 verdrehbar ist.

Dies wird dadurch bewirkt, dass der Durchmesser 227 des Teilbolzens 226 größer ausgebildet ist als die Breite 218 des Langlochs 212.

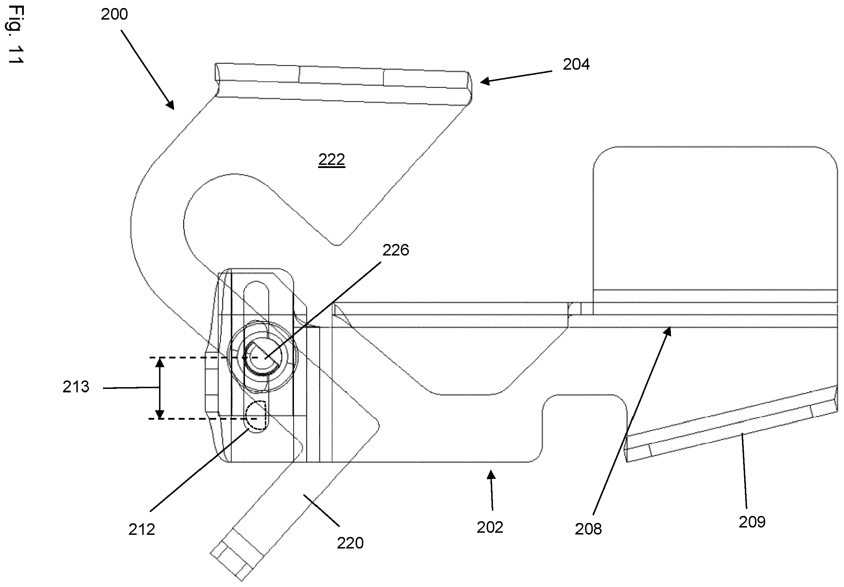

In einer Drehposition des Verriegelungselements 204 hingegen, welche in Figur 11 gezeigt ist, ist das Verriegelungselement 204 verdrehbar. Das Verriegelungselement 204 nimmt die Drehposition dann ein, wenn sich der Teilbolzen 226 in dem Wirkungsbereich der Aufweitung 216 befindet. Dabei ist der Wirkungsbereich gerade so dimensioniert, dass sich der Teilbolzen 226 frei in dem Wirkungsbereich verdrehen lässt. Die Verdrehbarkeit wird lediglich dadurch begrenzt, dass die Verriegelungseinheit 200 einen Anschlagabschnitt 201 aufweist, welcher parallel zu der Drehachse 223 des Teilbolzens 226 angeordnet ist. Hierbei schlägt das Verriegelungselement 204 im Zuge der Verdrehung desselben an dem Anschlagabschnitt 210, welcher in Figur 12 gezeigt ist, an und verhindert somit eine Verdrehung des Verriegelungselements 204 über diesen Punkt hinaus.

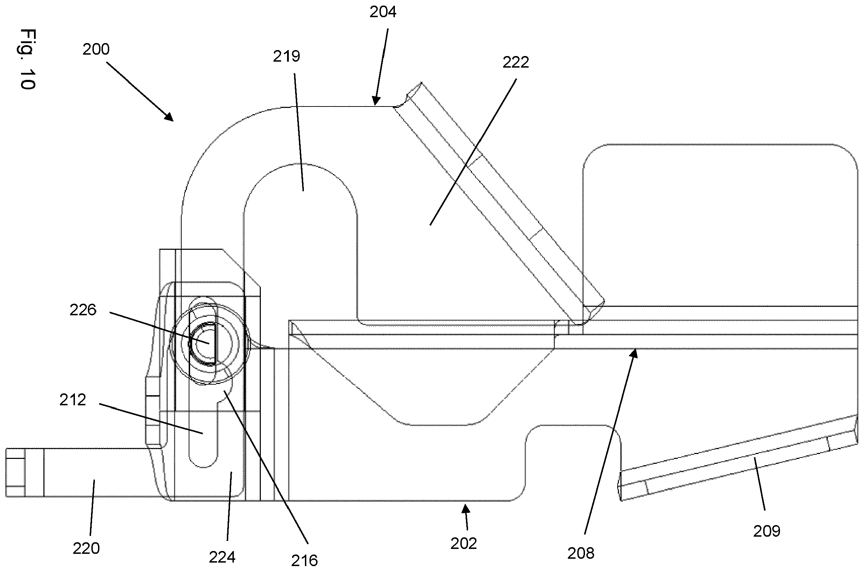

In dem Ausbauzustand wird das Verriegelungselement 204 infolge der auf das selbige wirkenden Schwerkraft in eine Maximalposition in dem Langloch 212 verschoben. Dabei nimmt der Teilbolzen 226 eine erste Maximalposition (dargestellt in Figur 9 und Figur 12) an, sofern sich die Trageinrichtung 230 in einer Nutzungsausrichtung (dargestellt in Figur 3) befindet. Die Nutzungsausrichtung ist dadurch gekennzeichnet, dass die Trageinrichtung 230 üblicherweise in dieser Ausrichtung zur Garung der Lebensmittel verwendet wird. Die zweite Maximalposition (dargestellt in Figur 10) wird vom Teilbolzen 226 dann eingenommen, wenn die Trageinrichtung 230 in einer Umkehrausrichtung (dargestellt in Figur 4) vorliegt, in der die Trageinrichtung 230 um 180° um eine Horizontale gegenüber der Nutzungsausrichtung verdreht ist. In den Maximalpositionen liegt das Verriegelungselement 204 in einer Festposition vor, bei der eine Verdrehung des Verriegelungselements 204 blockiert ist. Das Verriegelungselement 204 liegt somit in seiner Blockierstellung vor. Hierbei greift der Hakenabschnitt 222 des Verriegelungselements 204, wie in Figur 12 gezeigt, formschlüssig um die Haltestange 242 des Tragelements 232, ein und verhindert somit ein Ausziehen der oberen Schienen 238 und des daran befestigten Tragelements 232 relativ zu den unteren Schienen 236 der Schienensysteme 234.

Bei der Überführung der Trageinrichtung 230 von ihrem Ausbauzustand in einen Einbauzustand wird die Trageinrichtung 230 mittels des Ablageabschnitts 202 der Verriegelungseinheit 200 auf die unteren Aufnahmestangen 18a der Aufnahmen 14 aufgelegt. Hierbei wird die Führungseinrichtung 206 derart entlang der Längsachse 214 des Langlochs 212 bewegt, dass eine der unteren Aufnahmestange 18a zugewandte Unterseite derselben parallel zu der Ablagefläche 208 des Ablageabschnitts 202 ausgerichtet ist. Infolge der kraftschlüssigen Kopplung der Führungseinrichtung 206 mit dem Verriegelungselement 204 wird letzteres ebenfalls entlang des Langlochs 212 bewegt. Hierbei entspricht der Weg, den das Verriegelungselement 204 entlang der Längsachse 214 des Langlochs 212 zurücklegt, gerade dem Abstand zwischen der ersten Maximalposition des Verriegelungselements 204 und der Position, in der der Teilbolzen 226 in dem Wirkungsbereich der Aufweitung 216 angeordnet ist. Der Teilbolzen 226 wird somit automatisch im Zuge der Überführung der Trageinrichtung 230 in ihren Einbauzustand in den Wirkungsbereich der Aufweitung 216 verschoben. Ferner schlägt der Anschlagabschnitt 220 bei der Überführung der Trageinrichtung 230 in ihren Einbauzustand an der hinteren vertikale Verbindungsstange 20b an. Hierdurch erfolgt eine Verdrehung des Verriegelungselements 204 um die Drehachse des Teilbolzens 226, sodass das Verriegelungselement 204 in dessen Freistellung überführt wird. Hierdurch wird der Hakenabschnitt 222 die Haltestange 242 freigegeben, wodurch ein Ausfahren der Schienensysteme 234 freigegen ist. Die Verriegelungseinheit 200 liegt nunmehr in ihrem Freizustand vor. Die Trageinrichtung 230 kann mithin relativ zu dem Gehäuse 6 des Haushaltgeräts 2 ausgezogen werden.

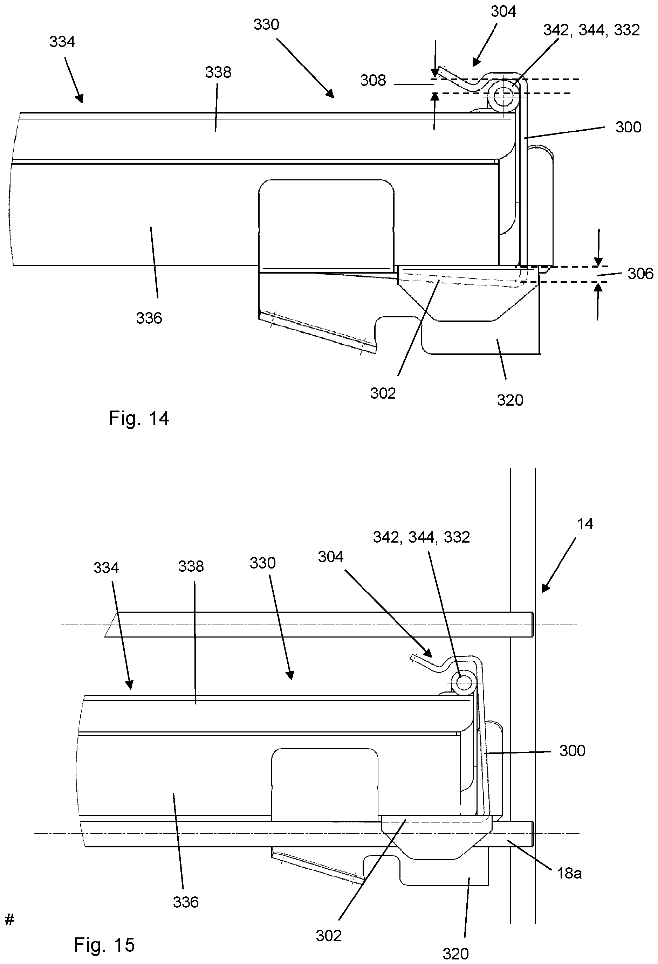

Eine Trageinrichtung 330 nach einem dritten, nicht erfindungsgemäßen Ausführungsbeispiel ist mit zwei Verriegelungselementen 300 versehen, welche jeweils an den unteren Schienen 336 der beiden Schienensysteme 334 angeordnet ist. In der Beschreibung dieses Ausführungsbeispiel werden Verriegelungseinheiten durch die Verriegelungselemente 300 selbst gebildet und sind mit ihnen identisch. Figur 14 zeigt einen vertikalen Schnitt durch ein Verriegelungselement 300 sowie durch die Trageinrichtung 330. Das Verriegelungselement 300 ist als Federelement ausgebildet. Dabei weist das Verriegelungselement 300 einen Befestigungsabschnitt 302 und einen Halteabschnitt 304 auf. Der Befestigungsabschnitt 302 dient zur Befestigung des Verriegelungselements 300 an der unteren Schiene 336 des Schienensystems 334. Hierbei ist ein freies Ende des Befestigungsabschnitts 302 fest mit der Schiene 336 verbunden, beispielsweise durch Verschweißen. Der Halteabschnitt 304 ermöglicht die Bildung eines Formschlusses mit der Trageinrichtung 330, insbesondere eines Endes 344 einer Haltestange 342 des Tragelements 332, welches wie weiter oben beschrieben mit der oberen Schiene verbunden, vorzugsweise verschweißt ist. Ein Querschnitt des Halteabschnitts 304 ist hierbei in etwa S-förmig ausgebildet und ermöglicht somit ein formschlüssiges Umgreifen der Haltestange 342. In einem Blockierzustand, wie in der Figur 14 dargestellt, blockiert das Verriegelungselement 300 unter Bildung eines Formschlusses mit dem Ende 344 der Haltestange 342 das Ausziehen des Schienensystems 334, wobei infolge der Verbindung des Verriegelungselements 300 mit der unteren Schiene 336 und des Tragelements 332 mit der oberen Schiene 338 die beiden Schienen 336 und 338 miteinander gekoppelt sind. Der in Figur 14 dargestellte Zustand der Trageinrichtung 330 entspricht ihrem Ausbauzustand.

In einem Einbauzustand hingegen, in dem die Trageinrichtung 330 in dem Haushaltsgerät 2 angeordnet ist und hierbei mit ihren Auflageelementen 320 auf der unteren Aufnahmestange 18a der Aufnahme aufliegt, bewirkt die infolge der durch das Eigengewicht der Trageinrichtung 330 hervorgerufene Gewichtskraft, dass das Verriegelungselement 300 derart verformt wird, dass der Halteabschnitt 304 des Verriegelungselements 300 die Haltestange 342 des Tragelements 332 freigibt. Figur 15 zeigt einen vertikalen Schnitt durch die Trageinrichtung 330 und das Verriegelungselement 300 in einem Einbauzustand der Trageinrichtung 330 und dem dadurch bewirkten Freizustand der Verriegelungseinheit 300. Insbesondere wird der Befestigungsabschnitt 302 derart verformt, dass selbiger parallel zu der unteren Aufnahmestange 18a der Aufnahme verläuft und vollständig auf dieser aufliegt. Infolgedessen wird der Halteabschnitt 304 entgegen der einwirkenden Gewichtskraft bewegt, indem die Trageinrichtung 330 gewissermaßen auf den Befestigungsabschnitt 302 aufgelegt wird. Dabei ist der Weg der Auslenkung an einen Durchmesser des Endes 344 der Haltestange 342 angepasst, sodass die Haltestange 342 des Tragelements 332 beim Ausziehen des Schienensystems 334 durch den entstandenen Spalt geführt werden kann. Mit anderen Worten übersteigt ein maximaler Verformungsweg 306 des Verriegelungselements 300 dessen Eingrifftiefe 308 an der Haltestange 342.

Wird die Trageinrichtung 330 nach der Verwendung aus dem Haushaltsgerät 2 entfernt, wird das Verriegelungselement 300 aufgrund des Wegfalls des Anschlags an der Aufnahme infolge der elastischen Verformung in dem Verriegelungselement 300 gespeicherten Rückstellkraft automatisch von seinem Freizustand in seinen Blockierzustand überführt. Ein Ausziehen des Schienensystems 334 ist mithin vorerst nicht möglich. Dies gilt sowohl für eine Nutzungsausrichtung der Trageinrichtung 330 als auch für eine um 180° gedrehte Umkehrausrichtung.

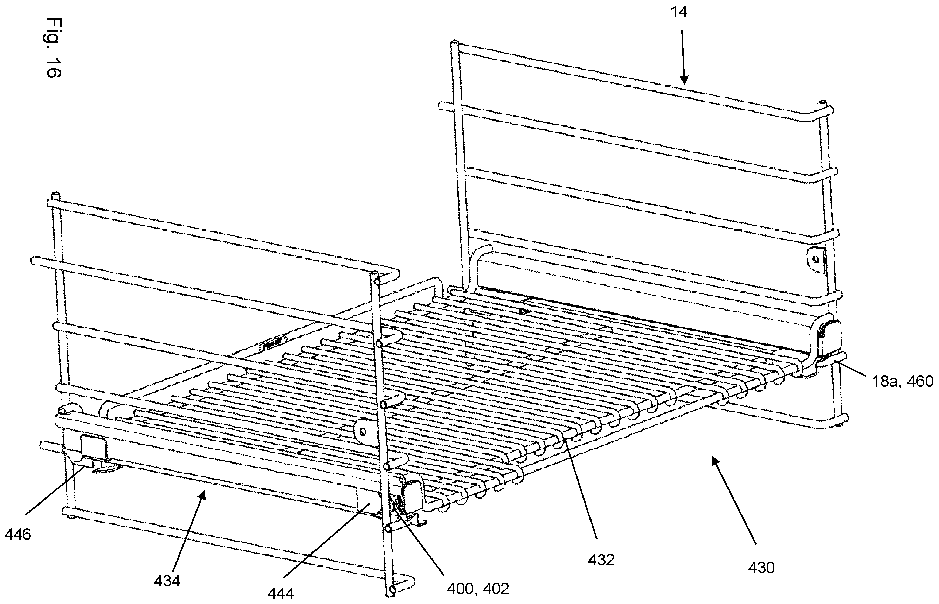

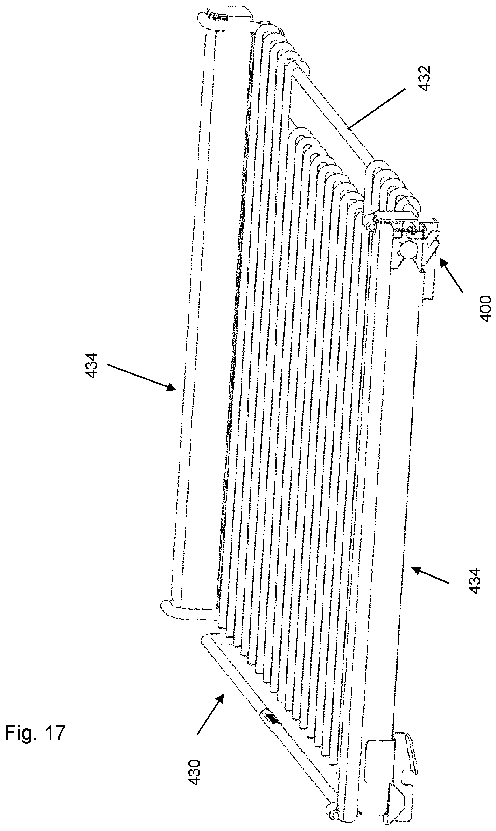

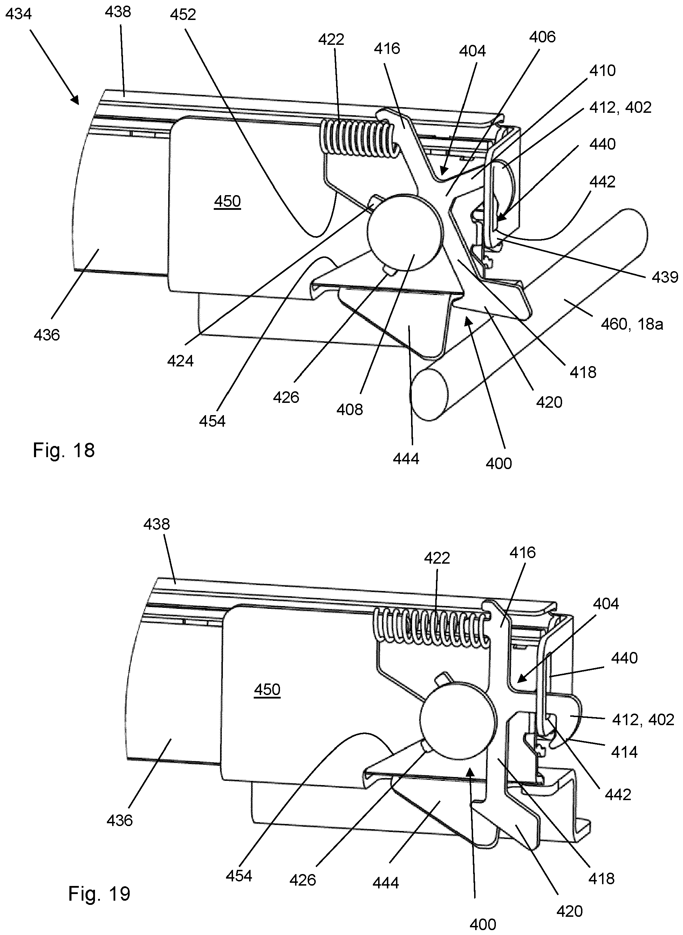

Die Figuren 16 bis 19 zeigen ein viertes Ausführungsbeispiel einer erfindungsgemäßen Trageinrichtung 430. Im Gegensatz zu den vorbeschriebenen Ausführungsformen sind die Verriegelungseinheiten 400 hier nicht im hinteren Bereich, sondern im vorderen Bereich der Schienensysteme 434 angeordnet, siehe Figur 16 und 17 zu erkennen ist. Auch hier werden die Verriegelungselemente 402 der Verriegelungseinheiten 400 beim Einsetzen der Trageinrichtung 430 in die Aufnahme 14, das heißt beim Überführen der Trageinrichtung 430 in ihren Einbauzustand, automatisch und ohne weiteres Zutun des Benutzers in ihren Freizustand überführt. Im Folgenden wird lediglich Bezug auf ein Schienensystem 434 und eine Verriegelungseinheit 400 genommen, gleichwohl sind an beiden Schienensystemen 434 Verriegelungseinheiten 434 vorgesehen. Es sei außerdem noch erwähnt, dass in den Figuren 18 und 19 das Tragelement 402 weggelassen wurde und nur ein Schienensystem 434 gezeigt ist.

Wie insbesondere aus den Figuren 17 und 18 zu erkennen ist, ist an der unteren Schiene 436 eines Schienensystems 434 ein Drehelement 404 drehbar gelagert. Das Drehelement 404 umfasst, ausgehend von einem zentralen Lagerbereich 406 einen Hakenarm 410, einen Federarm 416 und einen Betätigungsarm 418. Der Lagerbereich 406 besitzt eine Öffnung, die in den Figuren nicht erkennbar ist, weil durch sie ein Lagerbolzen 408 gesteckt ist, der an der unteren Schiene 436 befestigt ist. Vom Lagerbereich 406 erstrecken sich in den Figuren 17 bis 19 nach links zwei an das Drehelement 404 angeformte Anschläge 424 und 426. Der nach oben gerichtete Federarm 416 klemmt zusammen mit einem Haltelement 450, welches ebenfalls an der unteren Schiene 436 befestigt ist, eine Schraubenfeder 422 ein und drückt diese je nach Drehposition des Drehelements 404 mehr oder weniger zusammen. Der Betätigungsarm 418 erstreckt sich in den Figuren 17 bis 19 und damit in der Nutzungsausrichtung der Trageinrichtung 430 nach unten. Er besitzt einen angeformten Kontaktbereich 420, der in dem in den Figuren 16 und 18 gezeigten Einbauzustand der Trageinrichtung 430 an einem abgewinkelten Teilstück 460 der unteren Aufnahmestange 18a anliegt. Aus der Figur 1 ist zu erkennen, dass dieses abgewinkelte Teilstück 460 der unteren Aufnahmestange 18a sich im vorderen, zu einem der Tür 12 zugewandten Bereich der jeweiligen Seitenwandung 16 befindet und mit der vorderen vertikalen Verbindungsstange 20a verschweißt ist. Der Hakenarm 410, der sich in den Figuren 17 bis 19 nach rechts erstreckt, besitzt an seinem dem Lagerbereich 406 abgewandten Ende einen Haken 412, das eigentliche Verriegelungselement 402. Dieser ist so konstruiert und platziert, dass er unabhängig von der Drehposition des Drehelements 404 durch eine schlitzförmige Öffnung 440 greifen kann, die sich in einem abgewinkelten Ende 439 der oberen Schiene 438 befindet. Die gesamte Verriegelungseinheit 400 ist jeweils auf der Seite des Schienensystem 434 angeordnet, die zu der näherliegenden Seitenwandung 16 des Gehäuses 2 gerichtet ist. Sie befindet sich somit im Einbauzustand der Trageinrichtung 430 zwischen den jeweiligen Schienen 436 bzw. 438 und der jeweiligen Aufnahme 14 und ist deshalb für den Benutzer nicht erkennbar.

Um die Trageinrichtung 430 in den in den Figuren 16 und 18 gezeigten Einbauzustand zu bringen, wird diese, wie bei den zuvor beschriebenen drei Ausführungsbeispielen auch, mit ihren Auflageelementen 444 und 446 auf die unteren Aufnahmestangen 18a geschoben. Am Ende dieser Einschubbewegung gerät der Kontaktbereich 420 des Betätigungsarms 418 in Kontakt mit dem abgewinkelten Teilstück 460 der Aufnahmestange 18a und das gesamte Drehelement 404 wird aus der in den Figuren 17 und 19 gezeigten Positionen um ca. 30° gegen den Uhrzeigersinn in die in Figur 18 gezeigte Position gedreht, bis der obere Anschlag 424 gegen die obere Schräge 452 des Halteelements 450 drückt und dadurch die Drehbewegung gestoppt wird. In dieser Lage ist, wie in Figur 18 erkennbar, der Hakenarm 410 nach oben gedreht und der Haken 412 nicht mehr im Eingriff mit dem Rand 442 der Öffnung 440. Somit befindet sich die Verriegelungseinheit 400 in ihrem Freizustand. Mit der Drehung des Drehelements 404 gegen den Uhrzeigersinn wird auch der Federarm 416 in diese Richtung gedreht. Dabei drückt er die Schraubenfeder 422 gegen das Halteelement 450 und damit im Verlauf der Drehung zusammen. Das gesamte Drehelement 404 und damit insbesondere das Verriegelungselement 402 ist dadurch gegen die Kraft der Feder 422 vorgespannt und in einen Freizustand der Verriegelungseinheit 400 gedrückt. Die beiden Schienen 436 und 438 können gegeneinander bewegt und das Tragelement 432 kann zusammen mit den oberen Schienen 438, beispielsweise zur Be- und Entladung oder zur Kontrolle des Garguts während des Garvorgangs aus dem Innenraum 8 herausgezogen werden.

Beim Ausbauen der gesamten Trageinrichtung 430 aus dem Gerät 2 wird diese auf den unteren Aufnahmestangen 18a aus dem Gerät 2 herausgezogen. Dabei bewegt sich die untere Schiene 436 und damit auch die Verriegelungseinheit 400 mit ihrem Betätigungsarm 418 von dem abgewinkelten Teilstück 460 der Aufnahmestange 18a weg. Der Kontaktbereich 420 am Betätigungsarm 418 liegt dann nicht mehr an der Aufnahmestange 18a an, deshalb drückt die Schraubenfeder 422 das Drehelement 404 wieder in seine in den Figuren 17 und 19 dargestellte Position. Sollte in diesem Ausbauzustand der Trageinrichtung 430 das Tragelement 432 mit den oberen Schienen 438 bereits bis zum Ende auf die unteren Schienen 436 geschoben sein, wie in Figur 17 dargestellt, umgreift der Haken 412 den Rand 442 der Öffnung 440 und stellt einen Formschluss zwischen oberer Schiene 438 und unterer Schiene 436 her. Es wird dann automatisch der Blockierzustand des Verriegelungselements 402 erzeugt. Ist dagegen beim Ausbau der Trageinrichtung 430 die untere Schiene 436 noch ein Stück aus der oberen Schiene 438 herausgezogen (nicht dargestellt), so kann der Blockierzustand des Verriegelungselements 402 durch Einschieben der unteren Schiene 436 in die obere 438 durch den Benutzer hergestellt werden. Dazu ist der Haken 412 mit einer Anlaufschräge 414 versehen, die bei diesem Einschubvorgang das Drehelement 404 gegen die Kraft der Schraubenfeder 422 kurz gegen den Uhrzeigersinn dreht und den Hakenarm 410 nach oben bewegt. Wenn die Schienen 436 und 438 soweit zusammengeschoben sind, dass der Haken 412 vollständig durch die Öffnung 440 getaucht ist, bewegt die Feder 422 das Drehelement 404 wieder im Uhrzeigersinn und bringt den Haken 412 und damit das Verriegelungselement 402 in den Blockierzustand der Verriegelungseinheit 400.

Ein unterer Anschlag 426 drückt in dem in Figur 19 gezeigten Zustand des Drehelements 404 gegen die untere 454 Schräge des Halteelements 450. Dadurch wird verhindert, dass der Hakenarm 410 im Ausbauzustand der Trageinrichtung 430 und einem Zustand der Verriegelungseinrichtung 400, in dem der Haken 412 nicht in die Öffnung 440 eingreift, so weit gedreht wird, dass die Anlaufschräge 414 außerhalb ihres Wirkungsbereichs in Bezug auf die Öffnung 440 liegt. Außerdem verhindert der untere Anschlag 426 ein Drehen des Drehelements 404 in eine Postion, in der die Schraubenfeder aus ihrer Einklemmung zwischen Federarm 416 und Halteelement 450 herausfallen könnte.

Auch dieses Ausführungsbeispiel einer Trageinrichtung 430 besitzt Verriegelungseinrichtungen 400, deren Verriegelungselemente 402 in einem Ausbauzustand der Trageinrichtung 430 sowohl in deren Nutzungsausrichtung als auch in einer um 180° gedrehten Umkehrausrichtung sicher wirken.

### Bezugszeichenliste

- 2: Haushaltsgerät
- 4: Wandungen
- 6: Gehäuse
- 8: Innenraum
- 10: Frontseite
- 12: Tür
- 14: Aufnahme
- 16: Seitenwandungen
- 18: horizontale Stangenpaare
- 18a: untere Aufnahmestange
- 18b: obere Aufnahmestange
- 20a: vordere vertikale Verbindungsstangen
- 20b: hintere vertikale Verbindungsstange
- 22: Rückwand
- 30: Trageinrichtung
- 32: Tragelement
- 34: Schienensystem
- 36: untere Schiene
- 38: obere Schiene
- 40: Auflagestangen (Rost)
- 42: Haltestangen (Rost)
- 44: Enden der Haltestangen
- 46: erster Abschnitt des Endes
- 48: zweiter Abschnitt des Endes
- 50: Seitenfläche der oberen Schiene
- 52: Oberseite der Schienen
- 54: vorderes Auflageelement
- 56: hinteres Auflageelement
- 58: Sicherungsabschnitt

### Erstes Ausführungsbeispiel:

- 100: Verriegelungseinheit
- 110: erstes Verriegelungselement
- 112: Drehachse des ersten Verriegelungselements
- 114: Querstrebe
- 116: Anschlagstelle
- 118: Schwerpunkt
- 120: Wirkungslinie
- 122: Hebelarm
- 124: Kopfgewicht
- 126: Hakenabschnitt
- 130: Trageinrichtung
- 132: Tragelement
- 134: Schienensystem
- 136: untere Schiene
- 138: obere Schiene
- 142: Haltestangen
- 144: Enden der Haltestangen
- 150: zweites Verriegelungselement
- 152: Drehachse des zweiten Verriegelungselements
- 154: Ausnehmung
- 156: hinteres Auflageelement

### Zweites Ausführungsbeispiel:

- 200: Verriegelungseinheit
- 201: Anschlagabschnitt
- 202: Anlageabschnitt
- 204: Verriegelungselement
- 206: Führungseinrichtung
- 208: Ablagefläche
- 209: Halteelement
- 210: Anschlagabschnitt
- 211: Distanzelement am Teilbolzen
- 212: Langloch
- 213: Abstand
- 214: Längsachse
- 215: Öffnungsquerschnitt der Ausnehmung
- 216: halbkreisförmige Aufweitung
- 217: Durchmesser der Aufweitung
- 218: Breite des Langlochs
- 219: u-förmige Ausnehmung des Hakenabschnitts
- 220: Anschlagabschnitt
- 221: Längsachse des Anschlagabschnitts
- 222: Hakenabschnitt
- 223: Drehachse des Teilbolzens
- 224: Verbindungsabschnitt
- 225: Öffnung
- 226: Teilbolzen
- 227: Durchmesser des Teilbolzens
- 228: Mutter
- 229: Längsachse des Teilbolzens
- 230: Trageinrichtung
- 232: Tragelement
- 234: Schienensystem
- 236: untere Schiene
- 238: obere Schiene
- 242: Haltestange

### Drittes Ausführungsbeispiel:

- 300: Verriegelungselement, Verriegelungseinheit
- 302: Befestigungsabschnitt
- 304: Halteabschnitt
- 306: Verformungsweg
- 308: Eingrifftiefe
- 320: Auflageelement
- 330: Trageinrichtung
- 332: Tragelement
- 334: Schienensystem
- 336: untere Schiene
- 338: obere Schiene
- 342: Haltestange
- 344: Ende der Haltestange

### Viertes Ausführungsbeispiel:

- 400: Verriegelungseinheit
- 402: Verriegelungselement
- 404: Drehelement
- 406: Lagerbereich
- 408: Lagerbolzen
- 410: Hakenarm
- 412: Haken
- 414: Anlaufschräge
- 416: Federarm
- 418: Betätigungsarm
- 420: Kontaktbereich
- 422: Schraubenfeder
- 424: oberer Anschlag
- 426: unterer Anschlag
- 430: Trageinrichtung
- 432: Tragelement
- 434: Schienensystem
- 436: untere Schiene
- 438: obere Schiene
- 439: abgewinkeltes Ende der oberen Schiene
- 440: Öffnung
- 442: Rand der Öffnung
- 444: vorderes Auflageelement
- 446: hinteres Auflageelement
- 450: Halteelement
- 452: obere Schräge
- 454: untere Schräge
- 460: abgewinkeltes Teilstück der Aufnahmestange

## Patentansprüche

1. Haushaltsgerät (2) oder Gewerbegerät zum Reinigen, Lagern oder Garen von Gegenständen, umfassend ein von Wandungen (4) gebildetes Gehäuse (6), mittels dessen ein Innenraum (8) räumlich eingefasst ist, sowie mindestens eine aus dem Innenraum (8) entnehmbare Trageinrichtung (430),
• wobei die Trageinrichtung (430) mindestens ein Schienensystem (434) mit mindestens zwei miteinander verbundenen, relativ zueinander beweglichen Schienen (436 und 438) sowie mindestens ein Tragelement (432) umfasst,
• wobei das Schienensystem (434) bei Vorliegen der Trageinrichtung (430) in einem Einbauzustand derart in Kraft übertragender Weise an dem Gehäuse (6) gelagert ist, dass das Tragelement (432) mittels Ausziehens des Schienensystems (434) relativ zu dem Gehäuse (6) bewegbar ist,
• wobei eine an der Trageinrichtung (430) angeordnete Verriegelungseinheit (400), die mindestens ein Verriegelungselement (402) umfasst, zwischen einem Blockierzustand und einem Freizustand überführbar ist,
• wobei die Verriegelungseinheit (400) bei Vorliegen der Trageinrichtung (430) in deren Ausbauzustand, in dem die Trageinrichtung (430) körperlich von dem Gehäuse (6) getrennt ist, in ihrem Blockierzustand vorliegt, bei dessen Vorliegen das Verriegelungselement (402) unter Bildung eines Formschlusses das Ausziehen des Schienensystems (434) blockiert, und
• wobei die Verriegelungseinheit (400) bei Vorliegen der Trageinrichtung (5) in deren Einbauzustand in ihrem Freizustand vorliegt, bei dessen Vorliegen das Verriegelungselement (404) das Ausziehen des Schienensystems (434) freigibt,
**dadurch gekennzeichnet,**
**dass** das Verriegelungselement (402) wenigstens in dem Freizustand der Verriegelungseinheit (400) gegen die Kraft einer Feder (422) vorgespannt ist.

2. Haushaltsgerät (2) oder Gewerbegerät nach dem vorhergehenden Anspruch, **dadurch gekennzeichnet, dass** das Verriegelungselement (402) in dem Einbauzustand der Trageinrichtung (430) gegen die Kraft der Feder (422) in einen Freizustand der Verriegelungseinheit (400) gedrückt wird.

3. Haushaltsgerät (2) oder Gewerbegerät nach dem vorhergehenden Anspruch, **dadurch gekennzeichnet, dass** das Verriegelungselement (402) in dem Ausbauzustand der Trageinrichtung (430) von der Feder (422) in einen Blockierzustand der Verriegelungseinheit (400) gedrückt wird.

4. Haushaltsgerät (2) oder Gewerbegerät nach mindestens einem der vorhergehenden Ansprüche, **dadurch gekennzeichnet, dass** das Verriegelungselement (402) einen drehbar gelagerten Haken (412) umfasst.

5. Haushaltsgerät (2) oder Gewerbegerät nach dem vorhergehenden Anspruch, **dadurch gekennzeichnet, dass** der Haken (412) an einem ersten Bauteil der Trageinrichtung (430) angeordnet ist und zur Herstellung des Blockierzustands der Verriegelungseinheit (400) den Rand (442) einer Öffnung (440) in einem zweiten Bauteil der Trageinrichtung (430) umgreift.

6. Haushaltsgerät (2) oder Gewerbegerät nach dem vorhergehenden Anspruch, **dadurch gekennzeichnet, dass** der Haken (412) an einer ersten Schiene (436) und die Öffnung (440) an einer zweiten Schiene (438) des Schienensystems (434) angeordnet ist.

7. Haushaltsgerät (2) oder Gewerbegerät nach dem vorhergehenden Anspruch, **dadurch gekennzeichnet, dass** die erste Schiene (436) und der Haken (412) zu einer näherliegenden Seitenwandung (16) des Gehäuses (6) gerichtet sind.

8. Haushaltsgerät (2) oder Gewerbegerät nach mindestens einem der vier vorhergehenden Ansprüche, **dadurch gekennzeichnet, dass** der Drehwinkel des Hakens (412) in mindestens einer Drehrichtung durch einen Anschlag (424, 426) begrenzt wird.

9. Haushaltsgerät (2) oder Gewerbegerät nach mindestens einem der fünf vorhergehenden Ansprüche, **dadurch gekennzeichnet, dass** die Verriegelungseinheit (400) einen Betätigungsarm (418) umfasst, welcher bei Überführung der Trageinrichtung (430) in ihren Einbauzustand von dem Gehäuse (6) oder einem in Kraft übertragender Weise an dem Gehäuse (3) angeordneten Bauteil bewegt wird und dadurch den Haken (412) in den Freizustand der Verriegelungseinrichtung (400) dreht.

10. Haushaltsgerät (2) oder Gewerbegerät nach mindestens einem der vorhergehenden Ansprüche, **gekennzeichnet durch** mindestens eine Aufnahme (14), die in Kraft übertragender Weise an dem Gehäuse (6) angeordnet ist und dazu geeignet und ausgebildet ist, die Trageinrichtung (430) aufzunehmen, wobei vorzugsweise die Trageinrichtung (430) auf einer Auflagefläche der Aufnahme (14) ablegbar ist.

11. Haushaltsgerät (2) oder Gewerbegerät nach den beiden vorhergehenden Ansprüchen, **dadurch gekennzeichnet, dass** der Betätigungsarm (418) von einem abgewinkelten Teilstück (460) einer Aufnahmestange (18a) der Aufnahme (14) bewegt wird und dadurch den Haken (412) in seinen Freizustand dreht.

## Claims

1. Household appliance (2) or commercial appliance for cleaning, storing or cooking items, comprising a housing (6) formed by walls (4), by means of which housing an interior space (8) is spatially enclosed, and at least one support device (430) which can be removed from the interior space (8),
• the support device (430) comprising at least one rail system (434) having at least two rails (436 and 438) which are connected to one another and can move relative to one another, and at least one support element (432),
• when the support device (430) is in an installed state, the rail system (434) being mounted on the housing (6) in a force-transmitting manner, such that the support element (432) can move relative to the housing (6) by the rail system (434) being pulled out,
• it being possible to transfer a locking unit (400), which is arranged on the support device (430) and comprises at least one locking element (402), between a blocking state and a free state,
• the locking unit (400) being in its blocking state when the support device (430) is in its uninstalled state, in which the support device (430) is physically separated from the housing (6), and, when the locking unit is in said blocking state, by forming a form fit, the locking element (402) blocks the rail system (434) from being pulled out, and
• the locking unit (400) being in its free state when the support device (5) is in its installed state, and, when the locking unit is in said free state, the locking element (404) allows the rail system (434) to be pulled out,
**characterised in that**
at least when the locking unit (400) is in the free state, the locking element (402) is preloaded against the force of a spring (422).

2. Household appliance (2) or commercial appliance according to the preceding claim, **characterised in that,** when the support device (430) is in the installed state, the locking element (402) is pushed against the force of the spring (422) until the locking unit (400) is in a free state.

3. Household appliance (2) or commercial appliance according to the preceding claim, **characterised in that,** when the support device (430) is in the uninstalled state, the locking element (402) is pressed by the spring (422) until the locking unit (400) is in a blocking state.

4. Household appliance (2) or commercial appliance according to at least one of the preceding claims, **characterised in that** the locking element (402) comprises a rotatably mounted hook (412).

5. Household appliance (2) or commercial appliance according to the preceding claim, **characterised in that** the hook (412) is arranged on a first component of the support device (430) and grips around the edge (442) of an opening (440) in a second component of the support device (430) in order to establish the locking unit (400) in the blocking state.

6. Household appliance (2) or commercial appliance according to the preceding claim, **characterised in that** the hook (412) is arranged on a first rail (436) and the opening (440) is arranged on a second rail (438) of the rail system (434).

7. Household appliance (2) or commercial appliance according to the preceding claim, **characterised in that** the first rail (436) and the hook (412) are directed towards a closer lateral wall (16) of the housing (6).

8. Household appliance (2) or commercial appliance according to at least one of the four preceding claims, **characterised in that** the angle of rotation of the hook (412) is limited in at least one direction of rotation by a stop (424, 426).

9. Household appliance (2) or commercial appliance according to at least one of the five preceding claims, **characterised in that** the locking unit (400) comprises an actuating arm (418) which, when the support device (430) is transferred into its installed state, is moved by the housing (6) or a component arranged on the housing (3) in a force-transmitting manner, and thereby rotates the hook (412) until the locking device (400) is in the free state.

10. Household appliance (2) or commercial appliance according to at least one of the preceding claims, **characterised by** at least one receptacle (14) which is arranged on the housing (6) in a force-transmitting manner and is suitable for receiving and designed to receive the support device (430), it preferably being possible to place the support device (430) on a supporting surface of the receptacle (14).

11. Household appliance (2) or commercial appliance according to the two preceding claims, **characterised in that** the actuating arm (418) is moved from an angled portion (460) of a receiving rod (18a) of the receptacle (14), and thereby rotates the hook (412) into its free state.

## Revendications

1. Appareil électroménager (2) ou appareil industriel permettant de nettoyer, de stocker ou de cuire des objets, comprenant un boîtier (6) formé de parois (4), au moyen duquel un espace intérieur (8) est spatialement clos, ainsi qu'au moins un dispositif de support (430) pouvant être retiré de l'espace intérieur (8),
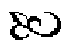 dans lequel le dispositif de support (430) comprend au moins un système de rails (434) comportant au moins deux rails (436 et 438) reliés l'un à l'autre et mobiles l'un par rapport à l'autre, ainsi qu'au moins un élément de support (432),
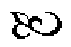 dans lequel, lorsque le dispositif de support (430) est présent dans un état installé, le système de rails (434) est monté sur le boîtier (6) de manière à transmettre une force de telle sorte que l'élément de support (432) peut être déplacé par rapport au boîtier (6) par déploiement du système de rails (434),
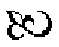 dans lequel une unité de verrouillage (400) disposée sur le dispositif de support (430) et comprenant au moins un élément de verrouillage (402) peut être transférée entre un état de blocage et un état de libération,
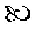 dans lequel, lorsque le dispositif de support (430) est présent dans son état désinstallé, dans lequel le dispositif de support (430) est physiquement séparé du boîtier (6), l'unité de verrouillage (400) est présente dans son état de blocage, dans lequel l'élément de verrouillage (402) bloque le déploiement du système de rails (434) en formant une complémentarité de forme, et
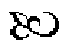 dans lequel, lorsque le dispositif de support (5) est présent dans son état installé, l'unité de verrouillage (400) est présente dans son état de libération, dans lequel l'élément de verrouillage (404) libère le déploiement du système de rails (434),
**caractérisé en ce que**
l'élément de verrouillage (402) est précontraint à l'encontre de la force d'un ressort (422) au moins dans l'état de libération de l'unité de verrouillage (400).

2. Appareil électroménager (2) ou appareil industriel selon la revendication précédente, **caractérisé en ce que,** lorsque le dispositif de support (430) est à l'état installé, l'élément de verrouillage (402) est poussé à l'encontre de la force du ressort (422) dans un état de libération de l'unité de verrouillage (400).

3. Appareil électroménager (2) ou appareil industriel selon la revendication précédente, **caractérisé en ce que,** lorsque le dispositif de support (430) est à l'état désinstallé, l'élément de verrouillage (402) est poussé par le ressort (422) dans un état de blocage de l'unité de verrouillage (400).

4. Appareil électroménager (2) ou appareil industriel selon au moins l'une des revendications précédentes, **caractérisé en ce que** l'élément de verrouillage (402) comprend un crochet (412) monté de manière à pouvoir pivoter.

5. Appareil électroménager (2) ou appareil industriel selon la revendication précédente, **caractérisé en ce que** le crochet (412) est disposé sur un premier composant du dispositif de support (430) et, pour l'établissement de l'état de blocage de l'unité de verrouillage (400), entoure le bord (442) d'une ouverture (440) dans un second composant du dispositif de support (430).

6. Appareil électroménager (2) ou appareil industriel selon la revendication précédente, **caractérisé en ce que** le crochet (412) est disposé sur un premier rail (436) et l'ouverture (440) est disposée sur un second rail (438) du système de rails (434).

7. Appareil électroménager (2) ou appareil industriel selon la revendication précédente, **caractérisé en ce que** le premier rail (436) et le crochet (412) sont dirigés vers une paroi latérale proche (16) du boîtier (6).

8. Appareil électroménager (2) ou appareil industriel selon au moins l'une des quatre revendications précédentes, **caractérisé en ce que** l'angle de pivotement du crochet (412) est limité dans au moins un sens de pivotement par une butée (424, 426).

9. Appareil électroménager (2) ou appareil industriel selon au moins l'une des cinq revendications précédentes, **caractérisé en ce que** l'unité de verrouillage (400) comprend un bras d'actionnement (418) qui, lors du transfert du dispositif de support (430) dans son état installé, est déplacé par le boîtier (6) ou un composant disposé sur le boîtier (3) de manière à transmettre une force et fait ainsi pivoter le crochet (412) dans l'état de libération du dispositif de verrouillage (400).

10. Appareil électroménager (2) ou appareil industriel selon au moins l'une des revendications précédentes, **caractérisé par** au moins un réceptacle (14) qui est disposé sur le boîtier (6) de manière à transmettre une force et est adapté et conçu pour recevoir le dispositif de support (430), dans lequel, de préférence, le dispositif de support (430) peut être placé sur une surface d'appui du réceptacle (14).

11. Appareil électroménager (2) ou appareil industriel selon les deux revendications précédentes, **caractérisé en ce que** le bras d'actionnement (418) est déplacé par une partie coudée (460) d'une tige de réception (18a) du réceptacle (14) et fait ainsi pivoter le crochet (412) dans son état de libération.
